## Europäisches Patentamt

## European Patent Office

## Office européen des brevets

(11) Numéro de publication : **0 112 425**
**B1**

(12) **FASCICULE DE BREVET EUROPÉEN**

(45) Date de publication du fascicule du brevet :
19.08.87

(51) Int. Cl.⁴ : **H 04 Q 11/04**

(21) Numéro de dépôt : 82430042.0

(22) Date de dépôt : 28.12.82

(54) Réseau de connexion temps-espace-temps utilisant une liaison en boucle fermée.

(43) Date de publication de la demande :
04.07.84 Bulletin 84/27

(45) Mention de la délivrance du brevet :
19.08.87 Bulletin 87/34

(84) Etats contractants désignés :
**AT BE DE FR GB IT NL SE**

(56) Documents cités :
EP-A- 0 042 666
DE-A- 2 743 854
US-A- 3 925 621
NACHRICHTENTECHNISCHE ZEITSCHRIFT N.T.Z., vol. 35, no. 8, août 1982, pages 520-523, Berlin, DE. M. SCHUMANN et al.: "Zwischenhighway zur räumlichen Vermittlung von 8x280 Mbit/s"
INTERNATIONAL SWITCHING SYMPOSIUM, 25-29 octobre 1976, pages 231.3.1 - 231.3.6, Kyoto, JP. I. ANDERSSON et al.: "Hugin - A high speed unibus group selector for integrated digital networks"
COMMUTATION & ELECTRONIQUE, no. 43, octobre 1973, pages 52-70, Paris, FR. P. VOYER et al.: "Réseaux de connexion temporels à grande capacité"
SYSTEMS TECHNOLOGY, no. 32, septembre 1979, pages 5-19, Liverpool, G.B. A.S. PHILIP et al.: "The system X digital switching subsystem (DSS)"
IBM TECHNICAL DISCLOSURE BULLETIN, vol. 13, no. 9, février 1971, pages 2525-2527, New York, USA R.W. BENNETT et al.: "Loop switching communications system"
IMPLEMENTING FUNCTIONS: MICROPROCESSORS AND FIRMWARE - 7th EUROMICRO Symposium on microprocessing and microprogramming, Paris, 8-10 septembre 1981, pages 83-89, North-Holland Publishing Company, Amsterdam, NL. W.F. GIOZZA et al.: "Fiber optics polyvalent local network"

(73) Titulaire : **International Business Machines Corporation**
**Old Orchard Road**
**Armonk, N.Y. 10504 (US)**
**BE DE GB IT NL SE AT**
**Compagnie IBM FRANCE**
**5 Place Vendôme**
**F-75000 Paris 1er (FR)**
**FR**

(72) Inventeur : **Boisseau, Marc**
**Chemin des Espelroures**
**F-06770 Gattieres (FR)**
Inventeur : **Borie, Jean Claude**
**Val des Roses Chemin des Lauriers**
**F-06600 Antibes (FR)**
Inventeur : **Croisier, Alain**
**1 avenue des Acacias**
**F-06800 Cagnes-sur-Mer (FR)**
Inventeur : **Demange, Michel**
**902 Route de Gattières**
**F-06640 Saint Jeannet (FR)**
Inventeur : **Lebizay, Gérald**
**6, Forest Park Avenue**
**Larchmont New York 10538 (US)**
Inventeur : **Rossi, Jean-Pierre Philippe**
**23 Allée de la Garennotte**
**F-33160 Cestas (FR)**

(74) Mandataire : **de Pena, Alain**
**Compagnie IBM France Département de Propriété Intellectuelle**
**F-06610 La Gaude (FR)**

**0 112 425**

**Description**

## Domaine Technique

La présente invention concerne les réseaux de connexion numériques, et plus particulièrement un réseau de connexion du type temps-espace-temps utilisant une liaison en boucle fermée capable de commuter aussi bien des signaux de voix numérisés que des signaux de données. Le réseau de connexion de l'invention est particulièrement bien adapté à une utilisation dans un central téléphonique privé à commande par calculateur.

## Etat de la Technique

Les progrès techniques réalisés en technologie des circuits intégrés et dans les procédés de numérisation des signaux de voix ont permis l'essor des réseaux de connexion temporels dont les principes étaient connus depuis fort longtemps. L'élément de base d'un réseau de connexion temporel est constitué de façon classique par une mémoire dite de commutation dans laquelle le contenu des voies temporelles entrantes est écrit séquentiellement à des adresses qui correspondent aux numéros des voies temporelles entrantes et dont la lecture est commandée par une mémoire dite de commande qui fournit séquentiellement les adresses qui correspondent aux numéros des voies temporelles sortantes. La capacité de commutation d'une mémoire de commutation est bien sur limitée et pour traiter des trafics plus importants ont utilise en général un ensemble de mémoires de commutation arrangées en matrice, qu'on désigne souvent par l'expression réseau de connexion temps-espace-temps et dont on trouvera un exemple dans la demande de brevet européen EP-A-0 039 134. Cet arrangement de mémoires de commutation présente une grande complexité, qui si elle est acceptable lorsqu'il s'agit de traiter des trafics de plus de 15 000 lignes, se justifie moins lorsqu'il s'agit de réaliser un central téléphonique privé.

Le brevet britannique GB-A-1 363 357 décrit un réseau de connexion temporel articulé autour d'une liaison en boucle fonctionnant en multiplex temporel et fermée par une unité de contrôle. L'unité de contrôle définit sur la liaison en boucle des voies temporelles de communication et des voies temporelles de signalisation qui sont capturées par des stations d'abonné attachées directement à la liaison en boucle. Ce réseau de connexion a une capacité de commutation de lignes trop faible et en outre nécessite l'utilisation de stations d'abonnés intelligentes et spécifiquement réalisées pour ce réseau.

Le document Nachrichtentechnische Zeitschrift, Vol. 35, No. 8, Août 1982, pages 520-523 décrit un système de connexion du type Temps-Espace-Temps, dans lequel les liaisons multiplex entrantes et sortantes sont reliées à des commutateurs temporels à mémoire qui sont eux-mêmes reliés entre eux par un bus grande vitesse fonctionnant à 280 Mbits/s.. Ce système qui n'est qu'expérimental nécessite des technologies grande vitesse et un système de synchronisation ultra précis. Il ne permet pas d'obtenir simplement des connexions station à station, ni des connexions de diffusion ou de collecte d'information entre les stations, ni bien sur des connexions en boucle des stations.

Le document International Switching Symposium, 25-29 Octobre 1976, pages 231.3.1-231.3.6, décrit un autre système de connexion du type Temps-Espace-Temps dans lequel l'étage de commutation spatiale est aussi constitué par un bus grande vitesse. Il ne permet pas non plus de connexions de diffusion ou de collecte d'information entre les stations, ni des connexions en boucle des stations.

Le document US-A-3 925 621 décrit un système de communication en boucle fermée, dans lequel plusieurs systèmes complets de connexion du type Temps-Espace-Temps sont reliés entre eux par une boucle fermée. Dans chaque système de connexion, l'étage de commutation spatiale est constitué par une matrice de commutation. Ce système ne permet pas non plus les types de connexions mentionnés ci-dessus.

## Exposé de l'Invention

Un objet de l'invention est de pallier les inconvénients des réseaux de connexion brièvement exposés ci-dessus et de fournir un réseau de connexion du type Temps-Espace-Temps qui n'offre pas de grande complexité et permettre l'attachement de stations d'abonné ou de stations de données quelconques.

Selon l'invention un réseau de connexion pour connecter sélectivement au moins une voie temporelle entrante sur une liaison multiplex entrante (LME) à au moins une voie temporelle sortante sur liaison multiplex sortante (LMS), du type comprenant plusieurs modules de commutation, chacun d'eux étant relié à une liaison multiplex entrante et à la liaison multiplex sortante correspondante et comprenant un commutateur temporel d'entrée comprenant une mémoire de pointeurs d'entrée (MPE) et une mémoire tampon d'entrée (MTE), un commutateur temporel de sortie comprenant une mémoire de pointeurs de sortie (MPS) et une mémoire tampon de sortie (MTS), et des moyens de commande (135) pour commander les commutateurs temporels d'entrée et de sortie en réponse à des messages de commande reçus d'un contrôleur (20), est caractérisé en ce qu'il comprend :

2

une liaison unidirectionnelle en boucle (10) fonctionnant en multiplex temporel avec des trames récurrentes de durées égales et sur laquelle circule continuellement un message multiplex dont la durée est égale à celle d'une trame et qui comprend n voies temporelles d'échange,

une liaison de synchronisation en boucle (12) sur laquelle circule un signal de synchronisation de trame en synchronisme avec le message multiplex, et

des moyens de bouclage (11) pour maintenir constant et égal la durée d'une trame le temps de propagation d'un message multiplex autour de la liaison unidirectionnelle en boucle (10),

le réseau de connexion étant caractérisé en outre en ce que :

chaque module de commutation comprend un compteur d'intervalles de temps (60) synchronisé par le signal de synchronisation de trame, pour assurer le synchronisme entre les commutateurs temporels d'entrée et de sortie, des moyens de porte et des moyens de commande, et des moyens de porte d'anneau qui comprennent une mémoire de pointeurs de porte (MPP) adressée cycliquement à chaque trame par le compteur d'intervalles de temps, et des moyens de transfert (PA) pour connecter sélectivement la sortie du commutateur temporel d'entrée à la liaison unidirectionnelle en boucle sous la commande des pointeurs de porte lus de la mémoire de pointeurs de porte,

la mémoire de pointeurs d'entrée (MPE) est adressée cycliquement à chaque trame par le compteur d'intervalles de temps, et emmagasine des pointeurs d'entrée, chacun d'eux comprenant une adresse, le pointeur d'entrée emmagasiné dans la $n^{ième}$ position de la mémoire de pointeurs d'entrée comprenant une adresse représentative du numéro de la voie d'échange à laquelle la $n^{ième}$ voie entrante est connectée,

la mémoire tampon d'entrée (MTE), reçoit le contenu des voies temporelles entrantes qui est inscrit cycliquement à chaque trame aux adresses spécifiées par les pointeurs d'entrée lus de la mémoire de pointeurs d'entrée, et est lue cycliquement à chaque trame et séquentiellement sous la commande du compteur d'intervalles de temps,

la mémoire de pointeurs de sortie (MPS) est adressée cycliquement à chaque trame par le compteur d'intervalles de temps, et emmagasine des pointeurs de sortie, chacun d'eux comprenant une adresse, le pointeur de sortie emmagasiné dans la $n^{ième}$ position de la mémoire de pointeurs de sortie comprenant une adresse représentative du numéro de la sortante à laquelle la $n^{ième}$ voie d'échange est connectée, et

la mémoire tampon de sortie (MTS), reçoit le contenu des voies d'échange qui est inscrit cycliquement à chaque trame sous la commande du compteur d'intervalles de temps, et est lue cycliquement à chaque trame et séquentiellement sous la commande des pointeurs de sortie lus de la mémoire de pointeurs de sortie.

D'autres objets, caractéristiques et avantages de la présente invention ressortiront mieux de l'exposé qui suit, fait en référence aux dessins annexés à ce texte qui représente un mode de réalisation préféré de l'invention.

## Brève Description des Figures

La figure 1 représente schématiquement la structure générale d'un réseau de connexion conforme à l'invention.

La figure 2 illustre schématiquement la circulation des données sur le réseau de connexion de la figure 1.

La figure 3 illustre schématiquement une communication bidirectionnelle entre deux stations A et B attachées respectivement aux modules de commutation MC-1 et MC-N.

la figure 4 illustre schématiquement une communication bidirectionnelle entre deux stations A et B attachées au même module de commutation.

La figure 5 illustre schématiquement une communication de diffusion entre une station émettrice et plusieurs stations réceptrices.

La figure 6 illustre schématiquement une communication de collecte entre plusieurs stations émettrices et une station réceptrice.

La figure 7 constituée par l'assemblage des figures 7A à 7F représente le bloc diagramme d'un module de commutation.

La figure 8 est un diagramme des temps qui aidera à la compréhension du fonctionnement du module de commutation de la figure 7.

La figure 9 est un diagramme de temps qui aidera à la compréhension du fonctionnement du dispositif de commande 135 de la figure 7.

La figure 10 représente le bloc diagramme du dispositif de commande 135 de la figure 7.

La figure 11 représente le bloc diagramme du dispositif de bouclage 11 de la figure 1.

La figure 12 est un diagramme des temps qui aidera à la compréhension du fonctionnement du dispositif de bouclage 11 illustré sur la figure 11.

La figure 13 représente un exemple de réalisation des dispositifs de chronologie 13 et 18 de la figure 1.

## Description Détaillée de l'Invention

3

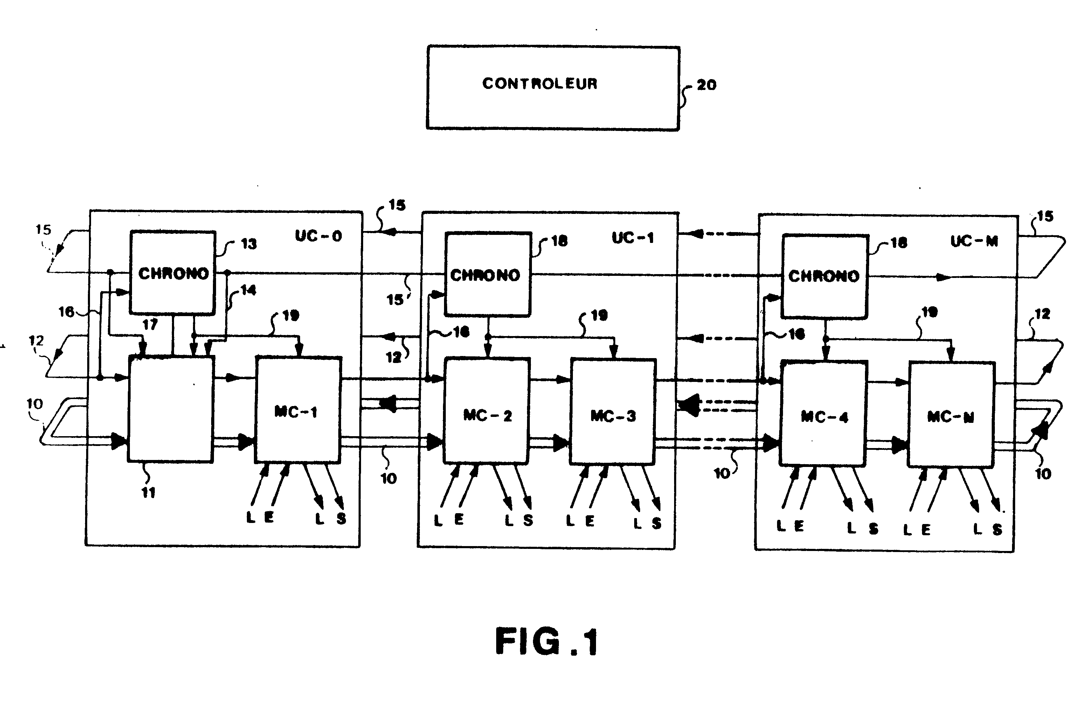

On a représenté sur la figure 1 la structure générale d'un réseau de connexion conforme à l'invention et qui permet de connecter sélectivement une ou plusieurs voies temporelles entrantes sur une ou plusieurs liaisons d'interface entrantes LE à une ou plusieurs voies temporelles sortantes sur une ou plusieurs liaisons d'interface sortantes LS. Le réseau de connexion est articulé autour d'une liaison unidirectionnelle 10 que l'on désignera par la suite par anneau. L'anneau fonctionne en mode multiplex temporel avec des trames récurrentes d'une durée de 125 microsecondes. Sur l'anneau 10 circule continuellement un message multiplex dont la durée est égale à celle d'une trame et qui permet d'acheminer, par exemple, 512 voies temporelles dites voies d'échange. Les liaisons d'interface LE et LS sont rassemblées en groupes et chaque groupe est couplé à l'anneau par un module de commutation MC. Le nombre de modules de commutation dépend du nombre de liaisons d'interface à connecter et de la puissance de commutation des modules de commutation. Les modules de commutation sont eux-mêmes groupés dans des unités de commutation UC. Sur la figure 1, on a représenté un module de commutation MC-1 dans l'unité de commutation UC-0, deux modules de commutation MC-2 et MC-3 dans l'unité de commutation UC-1 et deux modules de commutation MC-4 et MC-N dans l'unité de commutation UC-M. L'unité de commutation UC-0, diffère des autres unités en ce qu'elle comprend un dispositif de bouclage 11 qui maintient constant et égal à 125 microsecondes le temps de propagation d'un message multiplex autour de l'anneau. Un signal de synchronisation de trame ST circule sur une ligne de synchronisation 12 qui est parallèle à l'anneau et qui, comme lui, traverse les différents modules de commutation MC-1-MC-N et le dispositif de bouclage 11. Un dispositif de chronologie maître 13 situé dans l'unité de commutation UC-0 produit un signal de chronologie à 2,048 MHz qui est appliqué par une ligne 14 au dispositif de bouclage 11 et qui est distribué de proche en proche à chacune des unités de commutation au moyen d'une ligne de chronologie 15 qui est rebouclée sur le dispositif de chronologie maître 13. Le dispositif de chronologie maître 13 reçoit par une ligne 16 le signal de synchronisation ST présent à l'entrée du dispositif de bouclage 11 sur la ligne de synchronisation 12, et fournit sur une ligne 17 un signal de synchronisation de trame régénéré qui est appliqué au dispositif de bouclage 11. Dans chacune des unités de commutation UC-1 à UC-M le signal de chronologie à 2,048 MHz est régénéré par un dispositif de chronologie esclave 18 qui reçoit aussi le signal de synchronisation de trame présent à l'entrée de l'unité de commutation par une ligne qu'on a aussi référencé 16 dans un souci de cohérence. Chacune des unités de chronologie 13 et 18 produit un signal de chronologie à 16,384 MHz qui est appliqué à tous les éléments de l'unité de commutation par une ligne 19. Un contrôleur 20 contrôle l'ensemble des unités de commutation.

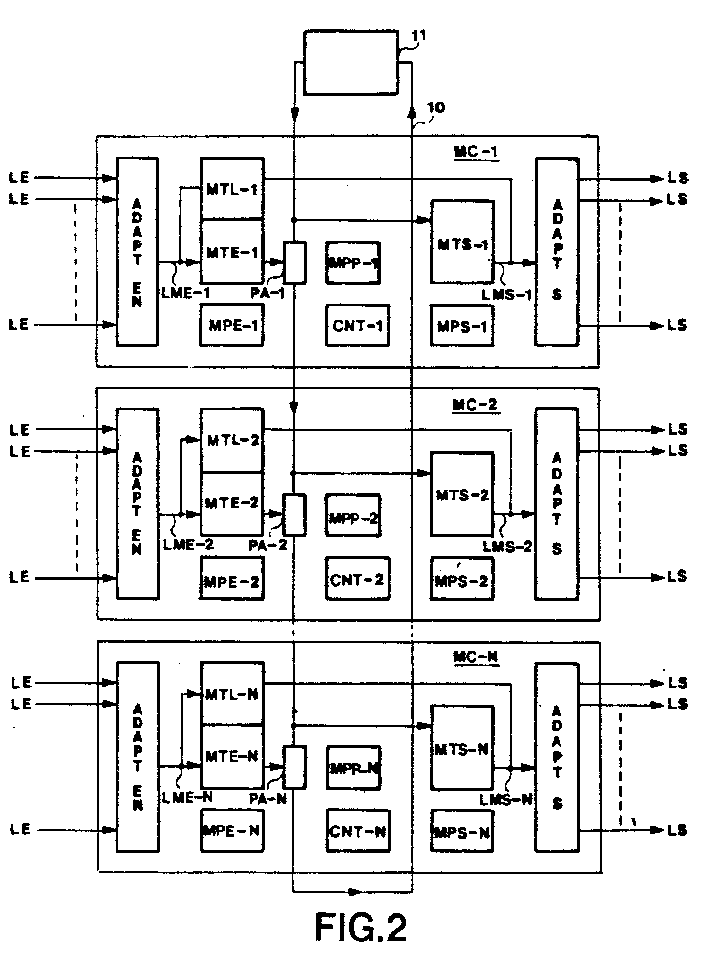

Avant de décrire dans le détail les éléments de l'invention, on décrira les diverses fonctions de commutation réalisées par le réseau de commutation de l'invention en se référant à la figure 2 sur laquelle on n'a représenté que trois modules de commutation référencés MC-1, MC-2 et MC-N et qui peuvent être situés dans la même unité de commutation ou dans des unités différentes, et le dispositif de bouclage 11. Dans le mode de réalisation illustré sur la figure 2 et qui sera décrit en détail par la suite, chacune des liaisons d'interface LE et LS fonctionne en mode multiplex temporel avec des trames récurrentes de 125 microsecondes, chaque trame pouvant acheminer 32 voies temporelles et chacune d'elles pouvant transporter un octet de huit bits. Chaque octet peut être indifféremment un octet de huit bits de données en provenance ou à destination d'une station numérique tel qu'un terminal de données, ou un échantillon de voix codé en numérique en provenance ou à destination d'une station analogique telle qu'un poste téléphonique d'abonné. Chaque module de commutation couple l'anneau 10 à un groupe de seize liaisons d'interface entrantes et le groupe des seize liaisons d'interfaces sortantes qui leur correspondent. Les seize liaisons d'interface entrantes sont multiplexées sur une liaison multiplexe entrante LME au moyen d'un adaptateur d'entrée ADAPT-EN. Chaque liaison multiplex entrante fonctionne en multiplex temporel avec des trames de 125 microsecondes, chaque trame permettant l'acheminement de 512 voies d'un octet. Les seize liaisons d'interface sortantes résultent du démultiplexage d'une liaison multiplex sortant LMS par un adaptateur de sortie ADAPT-S. Chaque liaison multiplex sortante fonctionne en multiplex temporel avec des trames de 125 microsecondes, chaque trame permettant l'acheminement de 512 voies d'un octet. Dans chaque module de commutation, les trames sur l'anneau, sur les liaisons multiplex LME et LMS et sur les liaisons d'interface LE et LS sont synchronisées entre-elles.

Tous les modules de commutation sont identiques et chacun d'eux comprend principalement un compteur d'intervalles de temps CNT, une porte dite porte d'anneau PA, un commutateur temporel d'entrée, un commutateur temporel de sortie et un commutateur temporel local. La porte d'anneau PA est commandée par une mémoire de pointeurs de porte MPP qui contient autant de positions de un bit qu'il y a de voies d'échange dans une trame, c'est-à-dire 512 positions de un bit. Le commutateur temporel d'entrée comprend principalement une mémoire tampon d'entrée MTE dont l'entrée est reliée à la liaison multiplex entrante LME et dont la sortie est reliée à l'anneau à travers la porte d'anneau PA. La mémoire tampon d'entrée MTE comporte autant de positions de 8 bits qu'il y a de voies d'échanges dans une trame et son adressage est commandé sélectivement par le compteur d'intervalles de temps CNT ou une mémoire des pointeurs d'entrée MPE qui contient autant de positions qu'il y a de voies sur une liaison multiplex entrante LME. Le commutateur temporel de sortie comprend principalement une mémoire tampon de sortie MTS dont l'entrée est reliée à l'anneau et dont la sortie est reliée à la liaison multiplex

4

sortante LMS. La mémoire MTS contient autant de position qu'il y a de voies d'échange dans une trame et son adressage est commandé sélectivement par le compteur CNT ou une mémoire de pointeurs de sortie MPS. Le commutateur temporel local comprend principalement une mémoire tampon locale MTL dont l'entrée est reliée à la liaison multiplex entrante LME et dont la sortie est reliée à la liaison multiplex sortante LMS. La mémoire MTL est similaire à la mémoire MTS et son adressage est commandé sélectivement par le compteur CNT ou une mémoire de pointeurs locaux MPL. Sur la figure 2, les différents éléments des modules de commutation MC-1, MC-2 et MC-N ont été identifiés par les suffixes 1, 2 et N respectivement.

Le réseau de connexion illustré sur la figure 2 offre de larges possibilités de commutation de voies de données et de voix et on en décrira ci-après quelques exemples typiques.

Communication bidirectionnelle entre deux stations attachées respectivement à deux modules de commutation différents.

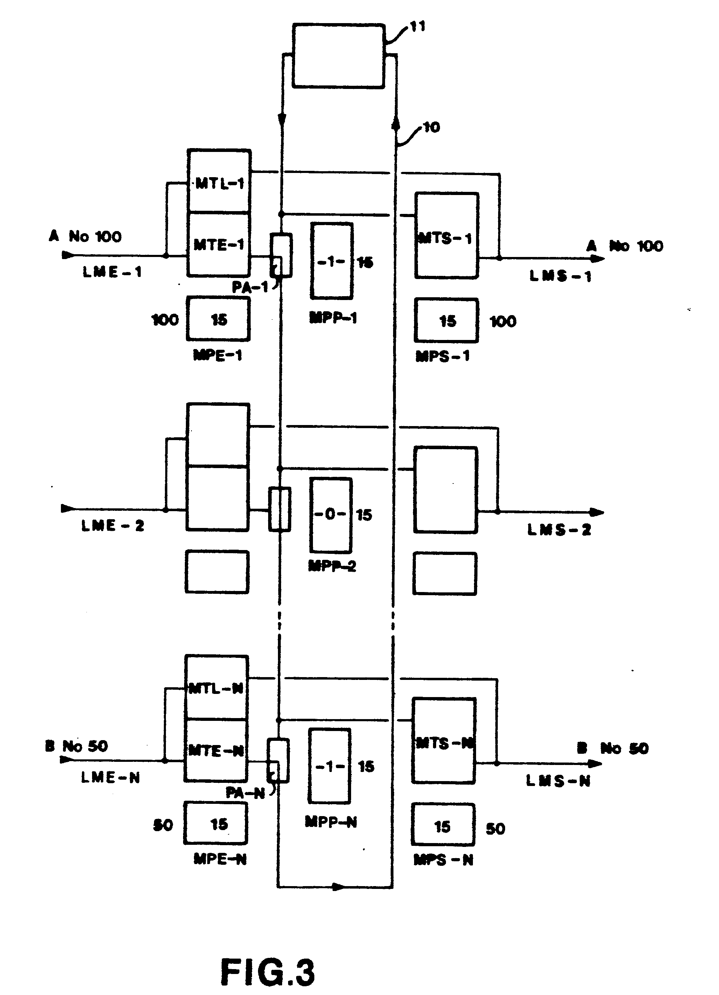

La figure 3 illustre schématiquement la connexion entre deux stations A et B attachées respectivement aux modules de commutation MC-1 et MC-N. On supposera que le contrôleur 20 qui gère le réseau de connexion a affecté la voie 100 dans les liaisons multiplex LME-1 et LMS-1 à la station A et la voie 50 sur les liaisons multiplex LME-N et LMS-N à la station B. Pour établir la connexion entre les stations A et B, le contrôleur 20 doit trouver une voie d'échange libre sur l'anneau. On supposera que la voie d'échange 15 a été trouvée libre et affectée à cette connexion. Les différentes mémoires de pointeurs sont chargées comme suit :

la quinzième position des mémoires de pointeurs de porte MPP-1 et MPP-N est mise à « 1 », et la quinzième position des autres mémoires de pointeurs de porte du réseau est mise à « 0 » ; et

l'adresse 15 est inscrite dans la position 100 des mémoires de pointeurs MPE-1 et MPS-1, et dans la position 50 des mémoires de pointeurs MPE-N et MPS-N.

Connexion A vers B.

Dans chacun des modules de commutation, le compteur d'intervalles de temps CNT est synchronisé avec l'apparition des voies d'échange sur l'anneau et des voies sur les liaisons multiplexes LME et LMS.

Pendant un cycle donné de 125 microsecondes, par exemple le cycle n, lorsque le compteur CNT-1 atteint la valeur 100, il adresse la position 100 de la mémoire de pointeurs d'entrée MPE-1, le pointeur d'entrée lu de cette position adresse la position 15 de la mémoire tampon d'entrée MTE-1, et l'octet en provenance de la station A sur la voie 100 de la liaison LME-1 est stocké dans la position 15 de la mémoire tampon d'entrée MTE-1. Au cycle suivant, lorsque le compteur CNT-1 atteint la valeur 15, il adresse la quinzième position de la mémoire de pointeurs de porte MPP-1, le pointeur de porte qui en est lu commande la porte d'anneau PA-1 de façon à ce qu'elle relie la sortie de la mémoire tampon d'entrée MTE-1 à l'anneau et le contenu de la quinzième position de la mémoire MTE-1 est placé sur la voie d'échange 15. Lorsque la voie d'échange 15 atteint le module de commutation MC-N, son contenu est stocké dans la position 15 de la mémoire tampon de sortie MTS-N sous le contrôle du compteur CNT-N. Au cycle suivant, lorsque le compteur CNT-N atteint la valeur 50, il adresse la position 50 de la mémoire de pointeurs MPS-N, le pointeur de sortie qui en est lu adresse la position 15 de la mémoire tampon de sortie MTS-N et son contenu, c'est-à-dire l'octet en provenance de la station A est placé sur la voie 50 de la liaison LMS-N à destination de la station B. Le processus décrit ci-dessus est répété à chaque cycle jusqu'à ce que la connexion A-B soit interrompue.

Connexion B vers A.

La connexion B vers A est réalisée de façon similaire à la connexion A vers B, mais il faut noter que les deux connexions utilisent la même voie d'échange 15. Dans notre exemple, lorsque la voie d'échange 15 se présente au niveau du module de commutation MC-N l'octet en provenance de A qui y était contenu est transféré à la station B comme décrit ci-dessus et est remplacé par un octet qui provient de la station B à travers la porte d'anneau PA-N, la mémoire tampon d'entrée MTE-N et la voie 50 sur la liaison LME-N. La voie d'échange 15 qui contient maintenant l'octet en provenance de la station B est propagée le long de l'anneau et à travers le dispositif de bouclage 11 et son contenu est chargé dans la position 15 de la mémoire tampon de sortie MTS-1 pour transfert à la station A sur la voie 100 de la liaison LMS-1.

Communication bidirectionnelle entre deux stations attachées à un même module de commutation (connexion locale).

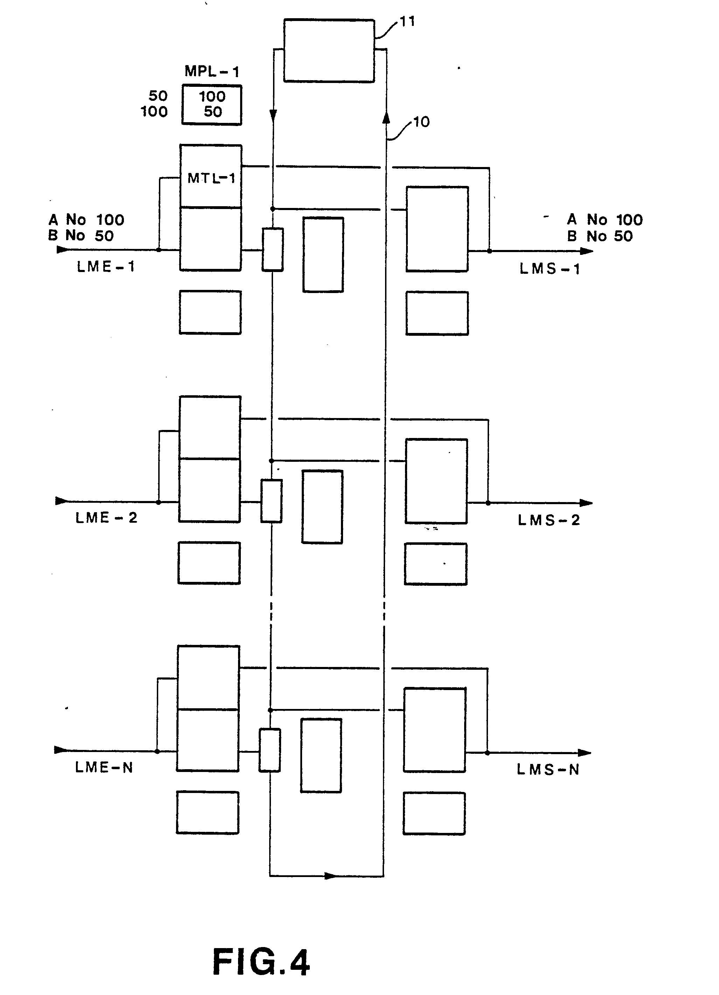

Une connexion locale n'utilise pas de voie d'échange sur l'anneau mais est établie au moyen du commutateur temporel local de module de commutation. La figure 4 illustre schématiquement la connexion entre deux stations A et B attachées au module de communication MC-1. On supposera que la voie 100 sur les liaison LME-1 et LMS-1 est affectée à la station A et la voie 50 sur ces mêmes liaisons est affectée à la station B. Les positions 50 et 100 de la mémoire de pointeurs MPL-1 sont chargées avec les adresses 100 et 50 respectivement. Au cours d'un cycle donné, lorsque le compteur CNT-1 atteint la valeur 50, l'octet en provenance de la station B sur la voie 50 de la liaison LME-1 est emmagasiné dans la position 50 de la mémoire tampon MTE-1, et lorsque le compteur CNT-1 atteint la valeur 100, l'octet en provenance de la station A sur la voie 100 est stocké dans la position 100 de la mémoire tampon locale MTL-1. Au cycle suivant, lorsque le compteur CNT-1 atteint la valeur 50, il adresse la position 50 de la mémoire de pointeurs MPL-1 et le pointeur qui en est lu adresse la position 100 de la mémoire tampon MTL-1 dont le contenu est placé sur la voie 50 de la liaison LMS-1 à destination de la station B. De même, lorsque le compteur CNT-1 atteint la valeur 100, l'octet en provenance de la station B, qui est stocké dans la position 50 de la mémoire tampon locale MTL-1 est placé sur la voie 100 de la liaison LMS-1 à destination de la station A.

Communication unidirectionnelle entre une station émettrice et plusieurs stations réceptrices (Diffusion).

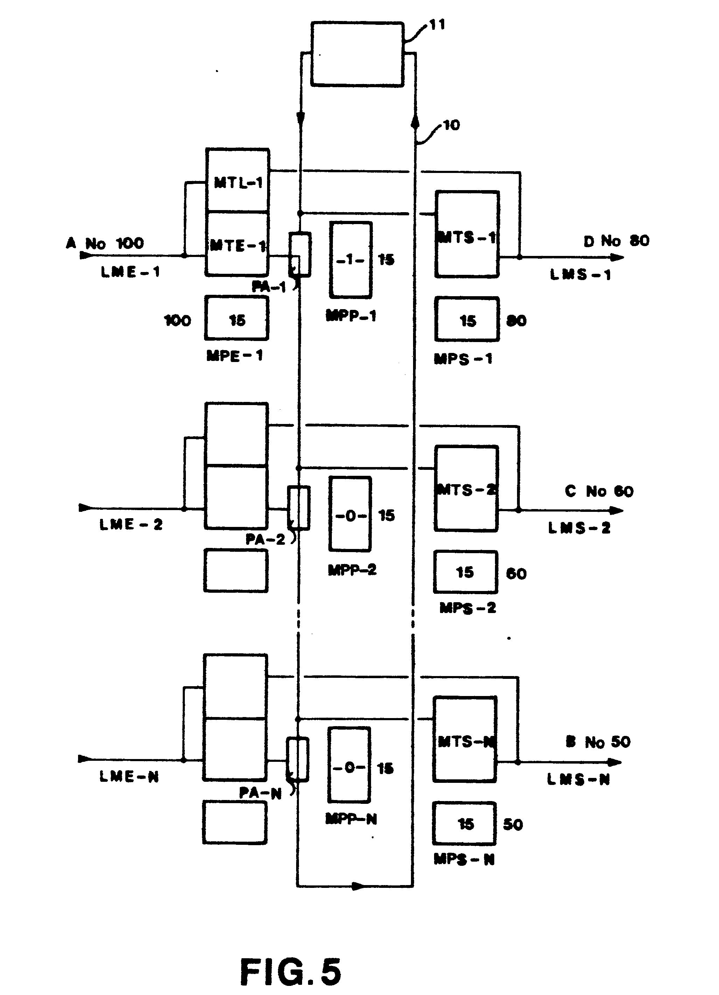

La figure 5 illustre schématiquement une connexion de diffusion entre une station émettrice A attachée au module de commutation MC-1 et trois stations réceptrices D, C et B attachées respectivement aux modules de commutation MC-1, MC-2 et MC-N. On suppose que la voie 100 sur la liaison LME-1 est affectée à la station A, que les voies 80, 60 et 50 sur les liaisons respectives LMS-1, LMS-2 et LMS-N sont affectées aux stations D, C et B, et que la voie d'échange 15 est affectée à la connexion. La position 15 de la mémoire de pointeurs de porte MPP-1 est mise à « 1 » et la position 15 des autres mémoires de pointeurs de porte du réseau sont mises à « 0 ». L'adresse 15 est inscrite dans la position 100 de la mémoire de pointeurs d'entrée MPE-1, la position 80 de la mémoire de pointeurs MPS-1, la position 60 de la mémoire de pointeurs MPS-2, et la position 50 de la mémoire de pointeurs MPS-N. Un octet en provenance de la station A est transféré dans la voie d'échange 15 comme expliqué plus haut. Quand cette voie d'échange 15 parvient au module de commutation MC-2, son contenu est emmagasiné dans la position 15 de la mémoire tampon MTS-2 d'où il sera transféré vers la station C sur la voie 60 de la liaison LMS-2 comme déjà expliqué. Lorsque la voie d'échange 15 parvient au module de commutation MC-N, son contenu est emmagasiné dans la position 15 de la mémoire tampon MTS-N d'où il sera transféré vers la station B sur la voie 50 de la liaison LMS-N. Lorsque la voie d'échange 15 parvient au module MC-1 après avoir traversé le dispositif de bouclage 11, son contenu est emmagasiné à la position 15 de la mémoire MTS-1 d'où il sera transféré vers la station D sur la voie 80 de la liaison LMS-1. Une telle connexion de diffusion est très simple et n'utilise qu'une voie d'échange, quel que soit le nombre de stations réceptrices.

Connexion unidirectionnelle entre plusieurs stations émettrices et une station réceptrice (collecte).

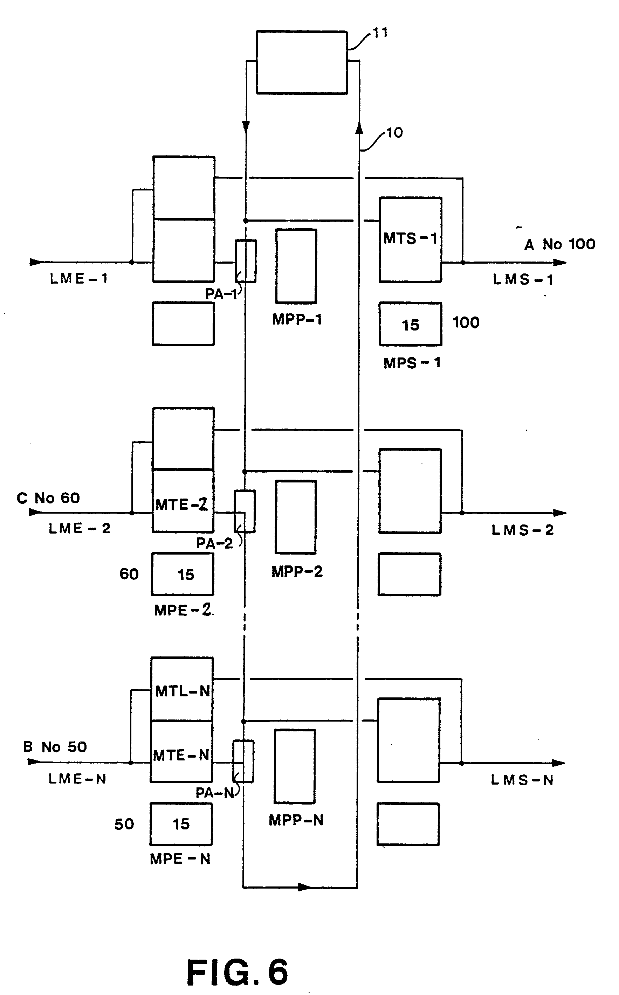

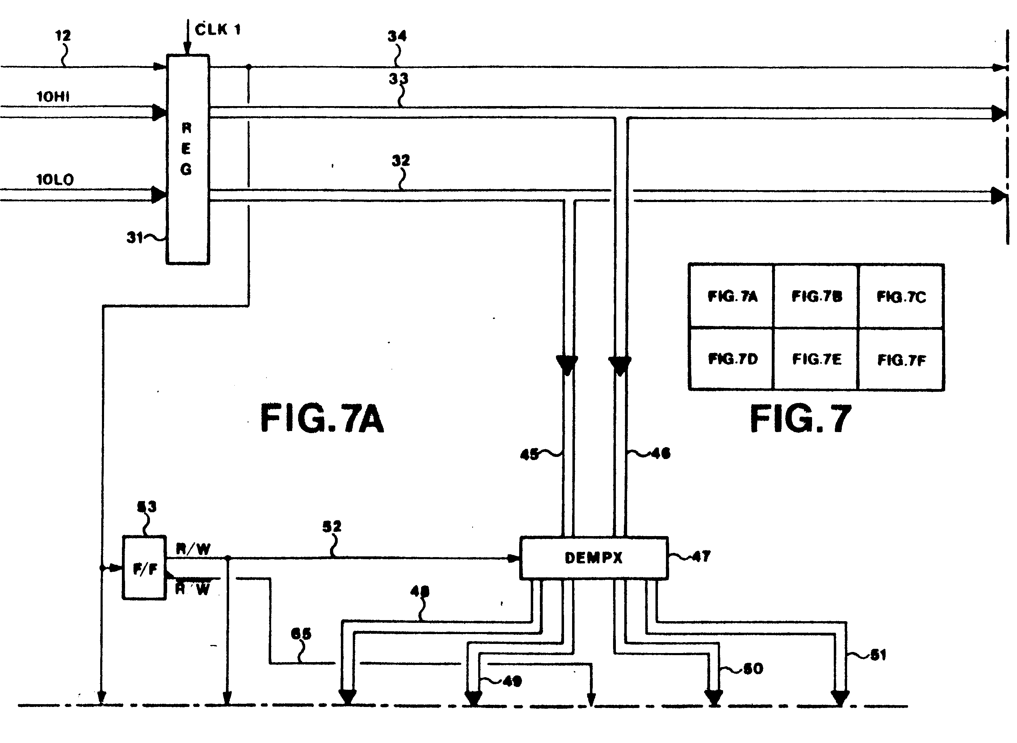

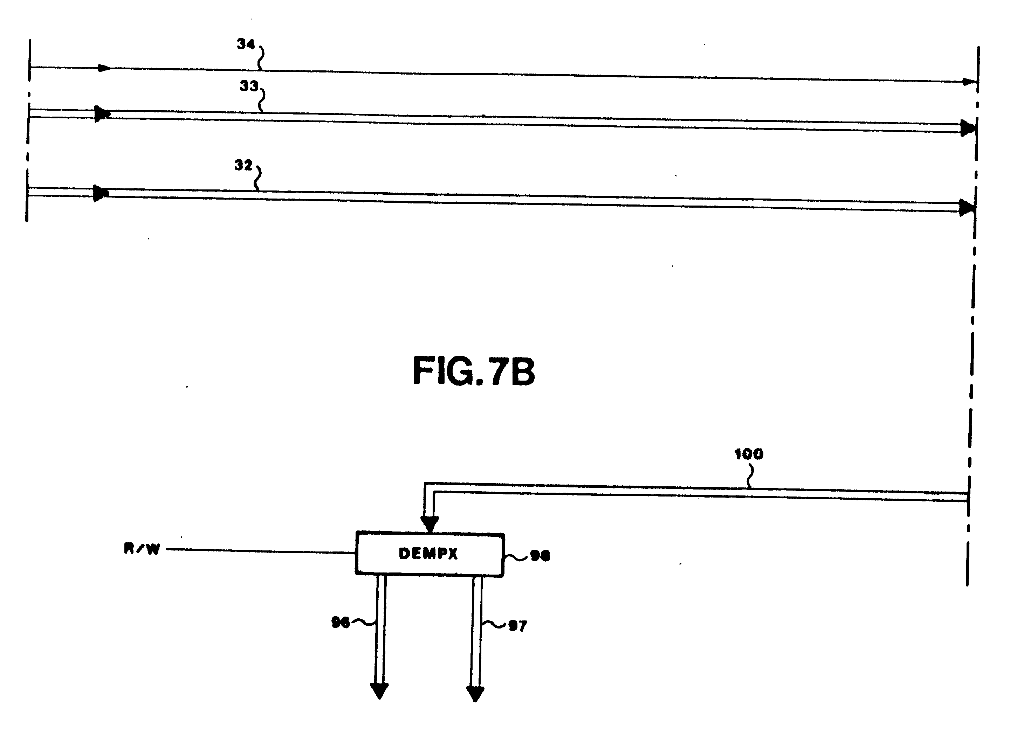

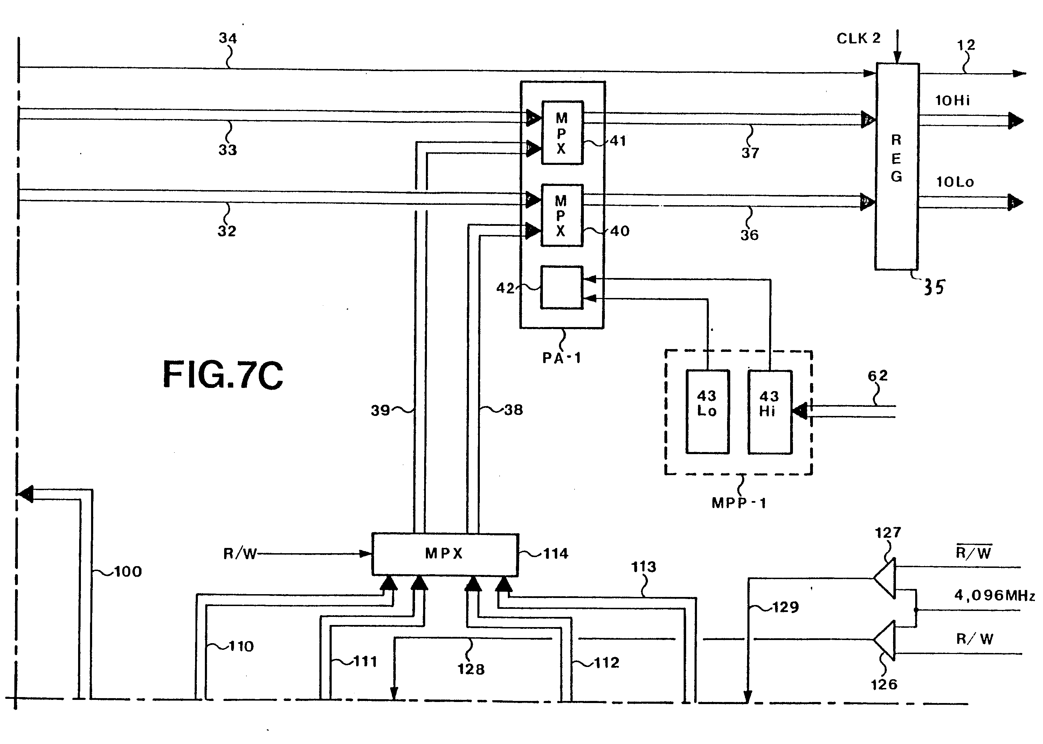

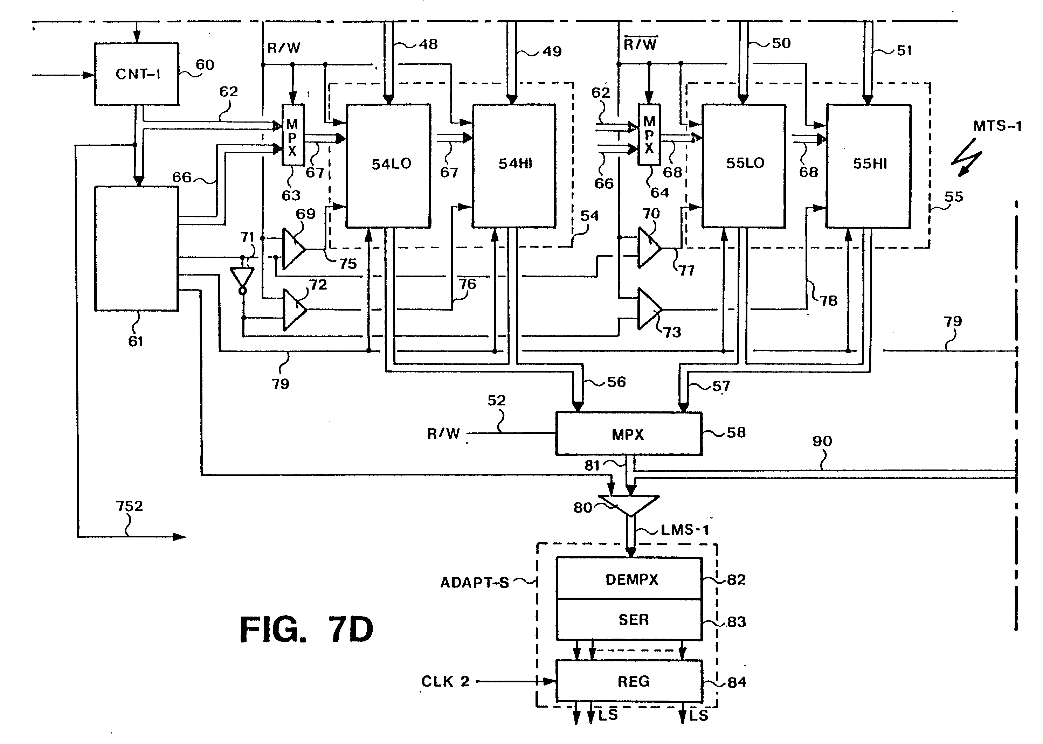

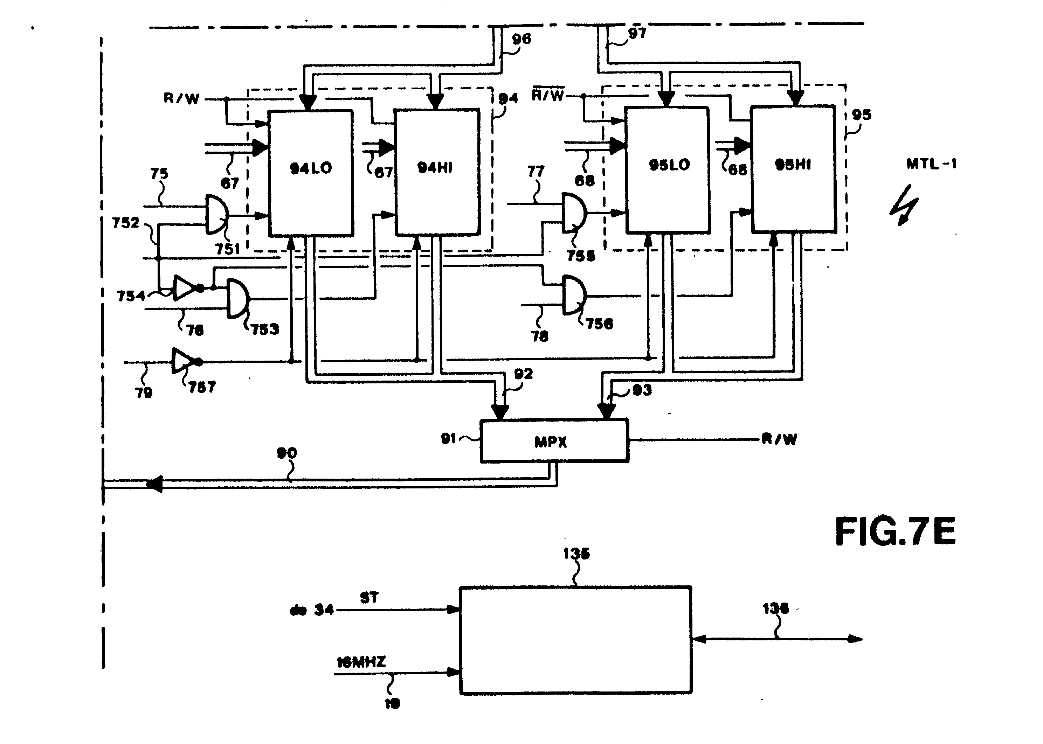

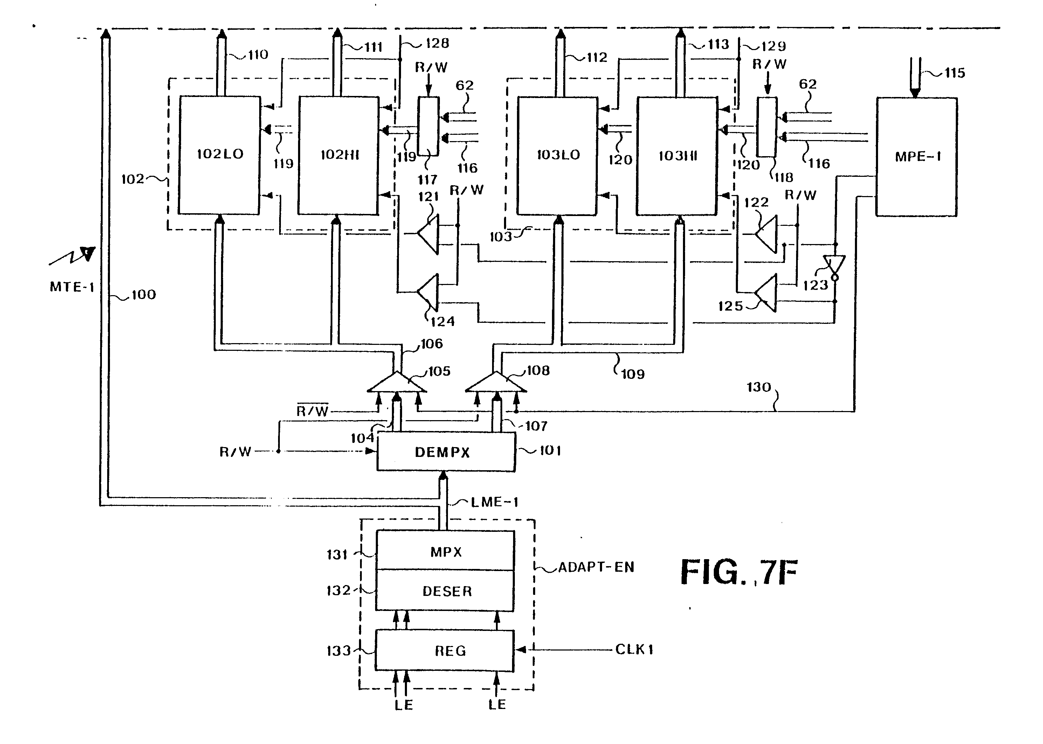

La figure 6 illustre une connexion de collecte entre deux stations émettrices C et B attachées aux modules MC-2 et MC-N et une station réceptrice A attachée au module de commutation MC-1. On suppose que les voies 100, 60 et 50 sur les liaisons LMS-1, LME-2 et LME-N sont affectées respectivement aux stations A, C et B, et que la voie d'échange 15 est affectée à la connexion. Les portes d'anneau PA-1, PA-2 et PA-N sont commandées comme illustré sur la figure. L'adresse 15 est inscrite dans la position 100 de la mémoire de pointeurs de sortie MPS-1, dans la position 60 de la mémoire de pointeurs d'entrée MPE-2 et dans la position 50 de la mémoire de pointeurs d'entrée MPE-N. Les stations C et B doivent maintenir une discipline d'émission de telle sorte qu'une seule d'entre elles émette à un instant donné. L'octet en provenance de la station C est transféré à la station A via la voie 60 sur la liaison LME-2, la mémoire tampon d'entrée MTE-2, la voie d'échange 15, la mémoire tampon de sortie MTS-1 et la voie 100 sur la liaison LMA-1. L'octet en provenance de la station B est transféré à la station A de façon similaire. Le fonctionnement détaillé des portes d'anneau dans ce cas sera décrit plus loin en référence à la figure 7.

Connexion multipoint

Une connexion multipoint bidirectionnelle peut être obtenue en combinant les connexions de diffusion et de collecte.

Connexion en boucle

L'homme de l'art comprendra qu'on peut aisément établir une connexion en boucle entre plusieurs stations en établissant des connexions unidirectionnelles successives entre deux stations et en utilisant toujours la même voie d'échange, par exemple, connexion A ver B, puis connexion B vers C, puis connexion C vers D, et ainsi de suite.

On a représenté sur la figure 7 qui est constituée de l'assemblage des figures 7A-7F, le bloc diagramme détaillé d'un module de commutation, par exemple celui du module de commutation MC-1, conforme à l'invention. Dans le mode de réalisation décrit dans cette figure, l'anneau 10 transporte deux voies d'échange en parallèle et est constitué par un bus à seize fils qui permet de transporter en parallèle

0 112 425

et simultanément deux octets de huit bis. Dans un souci de clarté, on a représenté sur la figure 7 le bus à seize fils par deux bus à huit fils référencés 10LO et 10HI. Chaque trame de 125 microsecondes est divisée en 256 intervalles de temps dits d'échange, et pendant chacun de ces intervalles de temps d'échange chacun des bus 10LO et 10HI transporte une voie d'échange d'un octet. L'ensemble des bus 102LO et 10HI est bien équivalent à un bus fonctionnant en multiplex temporel avec des trames de 125 microsecondes à 512 voies d'échanges. L'avantage de l'arrangement à deux bus parallèles décrit ci-dessus est qu'il ramène le débit binaire sur chacun des fils à 2,048 Mbps et la durée d'une intervalle de temps d'échange à 488 nanosecondes.

Le contenu des bus 10LO et 10HI amont et celui de la ligne de synchronisation 12 amont sont chargés dans un registre d'entrée à dix sept étages 31 sous le contrôle d'un signal de chronologie à 2,048 MHz CLK1. Les sorties du registres 31 qui correspondent aux bus 10LO et 10HI amont sont reliées respectivement à deux bus à huit fils 32 et 33 qui sont appliqués à la porte d'anneau PA-1. La sortie du registre 31 qui correspond à la ligne de synchronisation 12 amont est reliée par une ligne 34 à une des dix-sept entrées d'un registre de sortie 35 qui reçoit aussi deux bus à huit fils 36 et 37 reliés à la sortie de la porte d'anneau PA-1. Le contenu de la ligne 34 et des bus 36 et 37 est chargé dans le registre 35 le contrôle d'un signal de chronologie à 2,048 MHz CLK2. Les sorties du registre 35 qui correspondent à la ligne 34 et aux bus 36 et 37 sont reliées respectivement à la ligne de synchronisation 12 aval et aux bus 10LO et 10HI aval.

La porte d'anneau PA-1 qui reçoit aussi deux bus à huit fils 38 et 39 comprend principalement deux multiplexeurs 40 et 41. Le multiplexeur 40 connecte sélectivement l'un des bus 32 et 38 au bus 36 et le multiplexeur 41 connecte sélectivement l'un des bus 33 et 39 au bus 37. La porte d'anneau PA-1 comprend en outre un arrangement de portes logiques 42 qui commande les multiplexeurs 40 et 41 en fonction du contenu des bus 32, 33, 38 et 39 et de la valeur de deux pointeurs de porte LO et LI comme expliqué plus loin.

Les pointeurs de porte LO et HI sont contenus dans la mémoire de pointeurs de porte MPP-1 (figure 2) qui est constituée par deux modules de mémoire 256x1 bits 43LO et 43HI, qui contiennent respectivement les pointeurs de porte LO et HI qui correspondent aux voies d'échange sur les bus LO et HI. Les pointeurs de porte LO et HI lus de la mémoire de pointeurs de porte MPP-1 sont appliqués à l'arrangement de portes logiques 42.

Les bus 32 et 33 sont reliés respectivement par deux bus 45 et 46 à l'entrée d'un démultiplexeur 47 qui relie sélectivement la paire de bus 45, 46 à une paire de bus 48, 49 ou à une paire de bus 50, 51 sous le contrôle d'un signal R/W qu'il reçoit par une ligne 52. La ligne 52 est reliée à la sortie vraie d'une bascule de type flip-flop 53 dont l'entrée reçoit le signal de synchronisation de trame ST sur la ligne 34. Les deux paires de bus 48, 49 et 50, 51 sont appliquées à la mémoire tampon de sortie MTS-1 (figure 2) qui comprend deux mémoires tampons 54 et 55 fonctionnant en mode dit flip-flop qui sera expliqué plus loin. Les mémoires tampons 54 et 55 sont elles-mêmes constituées par deux modules de mémoire 256x8 bits référencés 54LO, 54HI et 55LO, 55HI respectivement. Les bus 48, 49, 50 et 51 sont appliqués respectivement à l'entrée de données des modules de mémoires 54LO, 54HI, 55LO et 55HI. Les sorties de données des modules de mémoires 54LO et 54HI sont reliées entre elles et à un bus à huit fils 56. Les sorties de données de modules de mémoire 55LO et 55HI sont reliées entre elles et à un bus à huit fils 57. Les bus 56 et 57 sont appliqués à un multiplexeur 58 commandé par le signal R/W sur la ligne 52. L'entrée lecture/écriture des modules de mémoire/écriture des modules de mémoire 54LO et 54HI reçoit le signal R/W sur la ligne 52 et les entrées lecture/écriture des modules de mémoire 55JO et 55HI reçoivent par une ligne 65 le signal $\overline{R/W}$ fourni par la sortie complémentaire de la bascule 53.

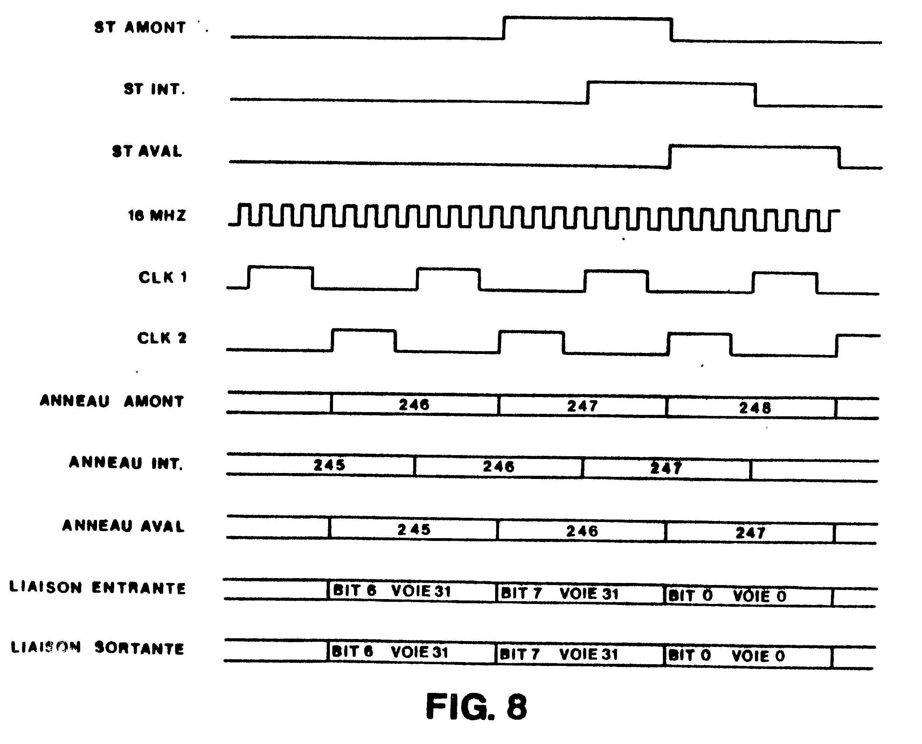

La mémoire tampon de sortie MTS-1 est adressée par un compteur d'intervalles de temps CNT-1 60 et une mémoire de pointeurs 61 qui réalise la fonction des mémoires de pointeurs MPS-1 et MPL-1 des figures 2 et 3. Le compteur 60 est un compteur à neuf étages qui compte des impulsions à 4,096 MHz et qui définit ainsi $2^9 = 512$ intervalles de temps de 244 nanosecondes. Le compteur 60 est synchronisé zéro par le signal de synchronisation de trame ST sur la ligne 34. Le signal de synchronisation de trame ST force le contenu du compteur 60 à la valeur 247 pour des raisons qui seront expliquées plus loin en référence à la figure 8. Les huit bits de plus fort poids du compteur 60, sont appliqués par un bus 62 à deux multiplexeurs 63 et 64 commandés respectivement par le signal R/W et le signal $\overline{R/W}$. Les neuf bits du compteur 60 sont utilisés pour adresser la mémoire de pointeurs 61 qui contient 512 positions de mémoire, chacune d'elles pouvant emmagasiner un pointeur de sortie/local à onze bits dont la composition est la suivante :

huit bits d'adresse
un bit LO/HI
un bit Local
un bit de marquage de sortie.

Les huit bits d'adresse lus de la mémoire de pointeurs 61 sont appliqués par un bus 66 à l'autre entrée du multiplexeur 63 dont la sortie est reliée à l'entrée d'adresse des modules 54LO et 54HI par un bus 67, et à l'autre entrée du multiplexeur 64 dont la sortie est reliée à l'entrée d'adresse des modules de mémoire 55LO et 55HI par un bus 68. Le bit LO/HI lu de la mémoire de pointeurs 61 est appliqué à une entrée d'une

7

porte ET 69 dont l'autre entrée reçoit le signal R/W, à une entrée d'une porte ET 70 dont l'autre entrée reçoit le signal $\overline{R/W}$, et à un inverseur 71. La sortie de l'inverseur 71 est appliquée à une entrée d'une porte ET 72 dont l'autre l'entrée reçoit le signal R/W et à une entrée d'une porte ET 73 dont l'autre entrée reçoit le signal $\overline{R/W}$. Les sorties des portes ET 69, 72, 70 et 73 sont appliquées respectivement à l'entrée de sélection des modules de mémoire 54LO, 54HI, 55LO et 55HI par des lignes 75, 76, 77 et 78 respectivement. Le bit Local lu de la mémoire de pointeurs 61 est appliqué par une ligne 79 à l'entrée de porte de sortie de données des modules de mémoire 54LO, 54HI, 55LO et 55HI. Le bit de marquage de sortie lu de la mémoire de pointeurs 61 est appliqué à une porte 80 qui reçoit aussi par un bus 81 la sortie du multiplexeur 58. La sortie de la porte 80 est reliée à un bus à huit fils qui constitue la liaison multiplex sortante LMS-1 de la figure 2.

Le bus LMS-1 est appliqué à l'adaptateur de sortie ADAPT-S (figure 2) qui comprend un démultiplexeur 82, un convertisseur parallèle-série 83 à seize sorties et un registre à seize étages 84. Les seize sorties du convertisseur parallèle-série 83 sont chargées dans le registre 84 sous le contrôle du signal de chronologie CLK2. Les seize sorties du 84 sont reliées aux seize liaisons d'interface sortantes LS (figure 2). Le démultiplexeur 82 réalise le démultiplexage des 512 voies sur le bus LMS-1 en seize liaisons à 32 voies. Il comprend de façon connue un commutateur à seize positions commandé par un signal de chronologie à 4,096 MHz chacune de ces positions permettant le chargement parallèle du contenu du bus LMS-1 dans un registre à huit étages. Les seize registres du démultiplexeur 82 seront lues en parallèle et séquentiellement à un rythme de 256 KHz dans les seize registres à décalage du convertisseur 83. Chacun des registres à décalage est alors vidé en série au rythme de 2,048 MHz sur l'une des liaisons d'interface sortante LS. La correspondance entre les voies sur le bus LMS-1 et les voies sur les liaisons LS est représentée dans le tableau I ci-dessous.

Tableau I

| LMS-1 Voie No | 0 | 1 | 2 | ... | 15 | 16 | ..... | 510 | 511 |
|---|---|---|---|---|---|---|---|---|---|
| LS Voie No | 0 | 0 | 0 | ... | 0 | 1 | ..... | 31 | 31 |
| LS No | 1 | 2 | 3 | | 16 | 1 | ..... | 15 | 16 |

Le bus 81 est relié par un bus 90 à la sortie d'un multiplexeur 91 dont les entrées sont reliées à deux bus 92 et 93 et qui est contrôlé par le signal R/W. Les bus 92 et 93 sont reliés à la sortie de la mémoire tampon locale MTL-1 dont la réalisation est semblable à celle de la mémoire-tampon de sortie MTS-1. Elle comprend deux mémoires tampons 94 et 95 fonctionnant en mode flip-flop, chacune d'elles comprenant deux modules de mémoire 256x8 bits référencés 94LO, 94HI et 95LO, 95HI. Le bus 92 est relié à la sortie de données des modules de mémoire 94LO et 94HI. Le bus 93 est relié à la sortie de données des modules de mémoire 95LO et 95HI. Les entrées de données de modules de mémoires 94LO et 94HI sont reliées entre elles et à un bus 96. Les entrées de données de modules de mémoire 95LO et 95HI sont reliées entre elles et à un bus 97. Les bus 96 et 97 sont reliés aux sorties d'un démultiplexeur 98 commandé par le signal R/W. L'entrée lecture/écriture des modules de mémoire 94LO et 94HI reçoit le signal R/W sur la ligne 52 et l'entrée lecture/écriture des modules de mémoire 95LO et 95HI reçoit le signal R/W sur la ligne 65. L'entrée d'adresse des modules de mémoire 94LO et 94HI reçoit le bus 67 et l'entrée d'adresse des modules de mémoire 95LO et 95HI reçoit le bus 68. L'entrée de sélection du module des mémoire 94LO reçoit la sortie d'une porte OU 751 qui reçoit comme entrées la ligne 75 et le bit de plus faible poids du compteur 60 qui lui est appliqué par une ligne 752. L'entrée de sélection du module de mémoire 94HI reçoit la sortie d'une porte OU 753 qui reçoit comme entrées la ligne 76 et la ligne 752 inversée par un inverseur 754. L'entrée de sélection du module de mémoire 95LO reçoit la sortie d'une porte OU 755 qui reçoit comme entrées les lignes 77 et 752. L'entrée de sélection du module de mémoire 95HI reçoit la sortie d'une porte OU 756 qui reçoit comme entrées la ligne 78 et la sortie de l'inverseur 754. L'entrée de porte de sortie des données de modules 94LO, 94HI, 95LO et 95HI est reliée à la sortie d'un inverseur 757 dont l'entrée reçoit la ligne 79.

Le démultiplexeur 98 a son entrée reliée par un bus 100 à un bus à huit fils qui constitue la liaison multiplex entrante LME-1 de la figure 2. Le bus LME-1 est appliqué à travers un démultiplexeur 101 à la mémoire tampon d'entrée MTE-1 qui est réalisée de façon semblable à celle des mémoires MTL-1 et MTS-1. La mémoire MTE-1 est constituée par deux mémoires tampons 102 et 103, chacune d'elles comprenant deux modules de mémoire 256x8 bits, référencés 102LO, 102HI et 103LO et 103HI. Une première sortie du démultiplexeur 101 est reliée à un bus 104 qui est appliqué à une porte ET 105 dont la sortie est appliquée par un bus 106 à l'entrée de données des modules de mémoire 102LO et 012HI. La seconde sortie du démultiplexeur 101 est reliée à un bus 107 qui est appliqué à une porte ET 108 dont la sortie est appliquée par un bus 109 à l'entrée données des modules de mémoire 103LO et 103HI. Les sorties de données des

8

modules de mémoire 102LO, 102HI, 103LO et 103HI sont appliquées respectivement par les bus 110, 111, 112 et 113 à un multiplexeur 114 qui est commandé par le signal R/W et dont la sortie est reliée aux bus 38 et 39.

La mémoire tampon d'entrée MTE-1 est adressée par le compteur d'intervalles de temps 60 et la mémoire de pointeurs d'entrée MPE-1. La mémoire de pointeurs d'entrée MPE-1 contient 512 positions de mémoire, chacune d'elles pouvant emmagasiner un pointeur d'entrée à dix bits dont la composition est la suivante :

huit bits d'adresse,
un bit LO/HI, et
un bit de marquage d'entrée

La mémoire de pointeurs MPE-1 est adressée par les neufs bits du compteur 60 qu'elle reçoit par un bus 115. Les huits bits d'adresse lus de la mémoire de pointeurs MPE-1 sont appliqués par un bus 116 à deux multiplexeurs 117 et 118 qui reçoivent aussi le bus 62 du compteur 60 et qui sont respectivement commandés par les signaux $\overline{R/W}$ et R/W. La sortie du multiplexeur 117 est appliquée par un bus 119 à l'entrée d'adresse des modules de mémoire 102LO et 102HI, et la sortie du multiplexeur 118 est appliquée par un bus 120 à l'entrée d'adresse des modules de mémoire 103LO et 013HI. Le bit LO/HI lu de la mémoire de pointeurs MPE-1 est appliqué à une entrée de deux portes ET 121 et 122 qui reçoivent respectivement sur leur entrée les signaux $\overline{R/W}$ et R/W. Le bit LO/HI est inversé par un inverseur 123 dont la sortie est appliquée à une entrée de deux portes ET 124 et 125 qui reçoivent respectivement sur leur autre entrée les signaux $\overline{R/W}$ et R/W. Les sorties des portes ET 121, 124, 122 et 125 sont appliquées respectivement à l'entrée de sélection des modules de mémoire 102LO, 102HI, 103LO et 103HI. La mémoire tampon d'entrée MTE-1 est pourvue d'un dispositif de remise à zéro après lecture qui permet, de façon connue de mettre à zéro une position de mémoire après sa lecture. Ce dispositif comprend une porte ET 126 qui reçoit le signal R/W et le signal de chronologie à 4,096 MHz et une porte ET 127 qui reçoit le même signal de chronologie et le signal $\overline{R/W}$. La sortie de la porte ET 126 est reliée par une ligne 128 à l'entrée lecture/écriture des modules de mémoire 102LO et 102HI. La sortie de la porte ET 127 est reliée par une ligne 129 à l'entrée lecture/écriture des modules de mémoire 103LO et 103HI. Le bit de marquage d'entrée lu de la mémoire de pointeurs MPE-1 est appliqué par une ligne 130 à une entrée des portes ET 105 et 108 qui reçoivent aussi respectivement les signaux $\overline{R/W}$ et R/W.

Le bus LME-1 est connecté à la sortie de l'adaptateur d'entrée ADAPT-EN (figure 2) qui a une structure réciproque de celle de l'adaptateur de sortie ADAPT-S et qui comprend un multiplexeur 131 et un convertisseur série-parallèle 132 dont les seize entrées sont reliées aux seize sorties d'un registre 133 sous le contrôle du signal CLK1. Les entrées du registre 133 sont reliées aux seize liaisons d'interface entrantes LE (figure 2).

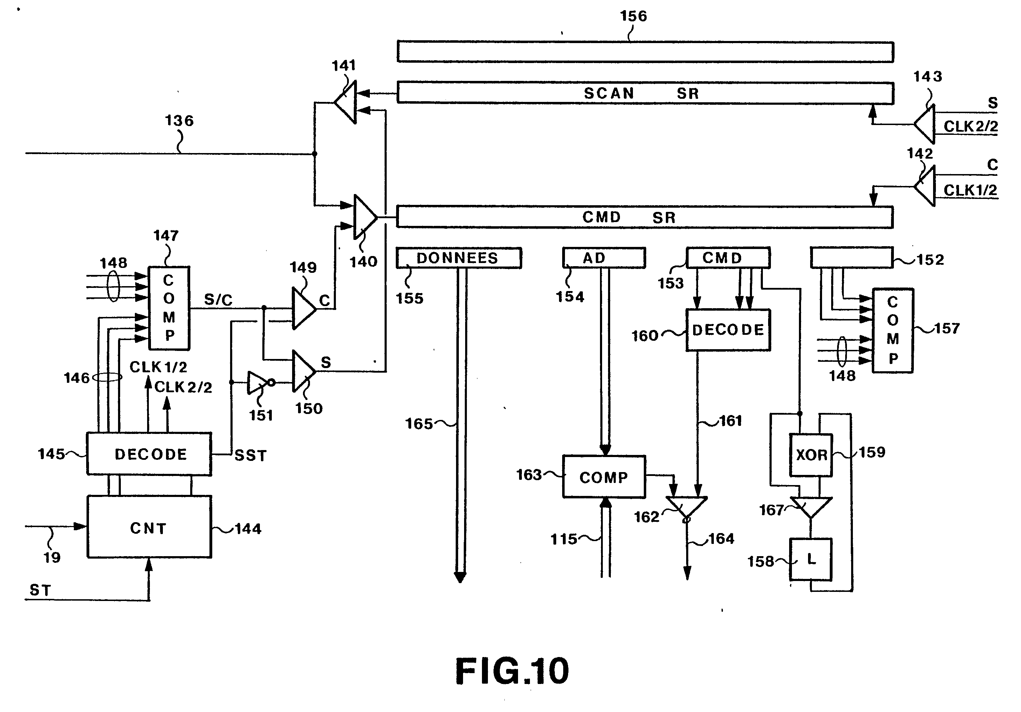

Les mémoires de pointeurs 61, MPE-1 et MPP-1 sont écrites sous le contrôle d'un dispositif de commande et de chronologie 135 qui sera décrit en référence à la figure 10. Il reçoit le signal de synchronisation de trame ST sur la ligne 34 et le signal de chronologie à 16,384 MHz sur la ligne 19 et est relié au contrôleur 20 par une liaison bidirectionnelle série 136.

On décrira maintenant le fonctionnement du module de commutation MC-1 illustré sur la figure 7. Le module de commutation réalise principalement quatre fonctions qui sont :

Interception d'une voie d'échange
Connexion entrante
Connexion sortante
Connexion locale

Interception d'une voie d'échange

Avant de décrire comment on intercepte une voie d'échange sur l'anneau, on décrira comment les voies d'échange circulent le long de l'anneau en se référant au diagramme de la figure 8. Les signaux de chronologie CLK1 et CLK2 sont des signaux à 2,048 MHz, le signal CLK2 étant retardé d'une demi-période par rapport au signal CLK1. Les voies d'échange, par exemple 246, sur les bus HI et LO de l'anneau amont se présentent à l'entrée du module de commutation MC-1 (c'est-à-dire à l'entrée du registre 31) pendant l'intervalle de temps défini par le signal CLK2 du module de commutation précédent. Le contenu des voies d'échange 246 est chargé dans le registre 31 à la transition positive suivante du signal CLK1 et reste présent dans le registre jusqu'à la nouvelle transition positive du signal CLK1, c'est-à-dire pendant la durée d'un intervalle de temps d'échange. Le contenu du registre 31 (en négligeant l'effet de la porte d'anneau PA-1) est chargé dans le registre 35 et est ainsi appliqué à l'anneau aval, à la transition positive suivante du signal CLK2. Le module de commutation introduit donc un retard égal à un intervalle de temps d'échange dans la circulation des voies d'échange le long de l'anneau. C'est pour tenir compte de ce retard que le signal de synchronisation de trame ST sur la ligne 12 est aussi retardé d'un même intervalle de temps au moyen des registres 31 et 35.

Les trames sur l'anneau, sur les liaisons d'interfaces entrantes et sortantes et sur les liaisons multiplex entrantes et sortantes sont synchrones entre elles. Afin d'avoir un système synchrone au niveau des liaisons d'interfaces entrantes et sortantes, c'est-à-dire afin que par exemple la voie 31 sur la liaison d'interface sortante soit présente sur cette liaison d'interface sortante en même temps que la voie 31 sur la liaison d'interface entrante correspondante est présente sur cette dernière voie, et afin de tenir compte du retard introduit par le traitement d'une voie dans le module de commutation, le signal de synchronisation de trame ST n'apparaît pas avec l'intervalle de temps d'échange 0 mais avec l'intervalle de temps d'échange 247. C'est pourquoi le compteur 60 n'est pas remis à zéro par le signal de synchronisation de trame et ce dernier force le contenu du compteur 60 à la valeur 247.

L'interception d'une voie d'échange par le module de commutation MC-1 est réalisée par la porte d'anneau PA-1 qui est commandée par les pointeurs de porte stockés dans la mémoire de pointeurs MPP-1. Celle-ci est adressée par les huit bits de plus fort poids du compteur d'intervalles de temps 60 qui fournissent en séquence 256 adresses distinctes à un rythme d'une adresse toutes les 488 nanosecondes, c'est-à-dire au rythme des intervalles de temps d'échange. Ce compteur est synchronisé avec le chargement du contenu des voies d'échange dans le registre 31 par le signal de synchronisation de trame ST. L'adresse fournie par le compteur 60 est appliquée en parallèle à chacun des modules de mémoire 43LO et 43HI de sorte qu'à chaque intervalle de temps d'échange, la mémoire de pointeurs MPP-1 fournisse simultanément les pointeurs de porte LO et HI qui correspondent aux voies d'échange sur les bus 32 et 33. Les pointeurs de porte LO et Hi commandent la porte PA-I comme illustré dans le tableau II ci-après. Si par exemple le pointeur de porte LO 246 a la valeur 1, ce qui indique que la voie d'échange 246 sur le bus LO doit être interceptée, le multiplexeur 40 déconnecte le bus 32 du bus 36 et connecte le bus 38 au bus 36, et ce pendant la durée de l'intervalle de temps d'échange 246. Le contenu du bus 38 est ainsi placé dans la voie d'échange 246 LO pour transfert sur l'anneau aval. Si le pointeur de porte LO 246 a la valeur 0, l'état de la porte d'anneau PA-1 est commandé par le contenu de la voie d'échange 246 sur le bus 32 et le contenu du bus 38 comme indiqué sur le tableau II ci-dessous.

Tableau II

| Pointeur de porte L20 (pointeur de porte HI) | Contenu bus 32 (contenu bus 33) | Contenu bus 38 (contenu bus 39) | Connexion |
|---|---|---|---|
| 1 | Indifférent | Indifférent | 38-36 (39-37) |
| 0 | Zéro | Zéro | 32-36 (33-37) |
| 0 | Non Zéro | Zéro | 32-36 (33-37) |
| 0 | Zéro | Non Zéro | 38-36 (39-37) |
| 0 | Non Zéro | Non Zéro | 32-36 (33-37) |

Dans un mode de réalisation simplifié, on pourrait concevoir un fonctionnement binaire de la porte d'anneau, indifférent au contenu des bus. Il ne serait pas alors nécessaire de prévoir l'arrangement de portes 42 et les pointeurs de porte commanderaient directement les multiplexeurs 40 et 41. Dans le mode de réalisation de la figure 7, l'arrangement 42 dont le fonctionnement est illustré par le tableau II a été prévu pour permettre au réseau d'établir une connexion de collecte comme exposée plus haut, et pour permettre au système de détecter certaines conditions d'erreur. Pour établir une connexion de collecte, et en utilisant l'exemple de la figure 6, la porte d'anneau PA-2 qui correspond à la première station émettrice sur la boucle est commandée de façon à réaliser l'interception de la voie d'échange 15 ; le pointeur de porte correspondant est 1. La porte PA-N qui correspond à la station B doit être commandée de façon que, si la station C transmet un octet alors que la station B est silencieuse, elle soit transparente à la voie d'échange 15, et si la station B transmet un octet alors que la station C est silencieuse elle réalise une interception de la voie d'échange 15 ; la commande de la porte d'anneau dans les deux situations ci-dessus est illustrée par les rangées 3 et 4 du tableau II. Si la station B essaye de transmettre un octet sur la voie d'échange 15 alors que celle-ci est déjà occupée, priorité est donnée au contenu initial de la voie d'échange 15 comme illustré par la dernière rangée du tableau II ; une condition d'erreur est alors reportée au contrôleur 20.

### Connexion entrante

Une connexion entrante permet de transférer un octet en provenance d'une voie sur une des liaisons d'interface entrantes sur une voie d'échange sur l'anneau. Un tel transfert est réalisé au moyen de la mémoire tampon d'entrée MTE-1. Les 512 voies sur la liaison multiplex entrante, qui résultent du multiplexage des voies sur les liaisons d'interfaces entrantes sont emmagasinées dans la mémoire MTE-1 aux adresses spécifiées par les pointeurs d'entrée, et le contenu de cette mémoire en est lu séquentiellement sous le contrôle du compteur d'intervalles de temps 60. En pratique, l'une des deux mémoires tampon 102 et 103 est écrite pendant toute la durée d'une trame pendant que l'autre est lue sur l'anneau, puis la mémoire tampon qui vient d'être écrite est lue, et ainsi de suite. Un tel mode de fonctionnement est dit flip-flop.

On supposera que pendant une trame particulière, par exemple la trame n, la mémoire tampon 102 est écrite alors que la mémoire tampon 103 est lue. Pendant toute la durée de la trame n, le signal R/W fourni par la sortie vraie de la bascule 53 est bas, et le démultiplexeur 101 relie le bus LME-1 au bus 104, le multiplexeur 114 connecte la paire de bus 112, 113 à la paire de bus 38, 39 et le multiplexeur 117 connecte la sortie de la mémoire de pointeurs d'entrée MPE-1 à l'entrée d'adresse des modules de mémoire 102LO et 102HI. Le signal R/W étant bas, il force la sortie de la porte ET 126 au niveau bas, ce qui met les modules de mémoire 102LO et 102LI en mode écriture. Le signal R/W est au niveau haut et conditionne les portes ET 105, 121 et 124. Le contenu des voies sur le bus LME-1 est emmagasiné dans la mémoire tampon 102LO comme expliqué ci-dessous à l'aide d'un exemple. On suppose que le contenu de la voie 46 sur le bus LME-1 doit être transféré sur la voie d'échange 65 du bus HI. Lorsque la voie 46 se présente sur le bus LME-1, le compte défini par les neuf bits du compteur 60 a atteint la valeur 46 et le pointeur d'entrée stocké dans la 46$^{ième}$ position de la mémoire de pointeurs en est lu. Ce pointeur d'entrée a la configuration suivante :

| Adresse | LO/HI | Marquage |
|---|---|---|
| 01000001 | 1 | 1 ou 0 |

Le champ d'adresse spécifie l'adresse 65 qui est appliquée aux modules de mémoire 102LO et 102HI. Le bit LO/HI étant à 1, inversé par l'inverseur 123, il force un niveau bas à l'entrée de sélection du module 102HI le sélectionnant. Le module de mémoire 102LO n'est pas sélectionné. Si le bit de marquage est 1, la porte 105 est conditionnée et le contenu de la voie 46 sur le bus LME-1 est chargé dans la position 65 du module de mémoire 102HI. Si le bit de marquage est 0, il déconditionne la porte ET 105 et un octet zéro est chargé dans cette position de mémoire.

Pendant la trame n + 1, le signal R/W est haut, le démultiplexeur 101 connecte le bus LME-1 au bus 107, le multiplexeur 114 relie la paire de bus 110, 11 à la paire de bus 38, 39, et le multiplexeur 117 relie la bus 62 constitué par les huit bits de plus fort poids du compteur 60 à l'entrée d'adresse des modules de mémoire 102LO et 102HI. Le signal R/W est bas et sélectionne les deux modules de mémoires à travers les portes ET 121 et 124. Les deux modules de mémoire 102LO et 102HI sont lus simultanément et séquentiellement sous le contrôle des huit bits de plus fort poids du compteur d'intervalles de temps 60, le contenu de la position 0 des modules LO et HI est placé dans la voie d'échange 0 sur les bus LO et HI, puis le contenu de la position 1, et ainsi de suite. Après qu'une position de mémoire ait été lue, elle est mise à zéro comme expliqué ci-dessus. Pendant toute la durée de la trame n + 1 le signal R/W est haut. Pendant la durée d'un intervalle de temps d'échange, le signal de chronologie à 4,096 MHz est successivement haut et bas. Pendant la première moitié d'un intervalle de temps d'échange, la sortie de la porte ET 126 est haute conditionnant les modules de mémoire 102LO et 102HI en mode lecture. Pendant la seconde moitié de cet intervalle de temps, la sortie de la porte ET 126 est basse conditionnant les modules de mémoire 102LO et 102HI en mode écriture, le signal R/W est bas forçant la sortie de la porte ET 105 à un niveau bas et un octet zéro est écrit dans les positions de mémoire adressées qui viennent d'être lues.

### Connexion sortante

Une connexion sortante permet de transférer le contenu d'une voie d'échange sur l'anneau sur une voie de l'une des liaisons d'interface sortantes LS. Le contenu des voies d'échange est chargé dans la mémoire tampon de sortie MTS-1 sous le contrôle du compteur d'intervalles de temps 60 et le contenu de cette mémoire en est lu sous le contrôle des pointeurs de sortie/locaux stockés dans la mémoire de pointeurs 61. En pratique, la mémoire MTS-1 est constituée par deux mémoires tampons qui fonctionnent en mode flip-flop comme celles qui constituent la mémoire tampon d'entrée MTE-1.

On supposera que pendant la trame n, la mémoire tampon 54 est écrite pendant que la mémoire tampon 55 est lue. Le signal R/W est bas, le démultiplexeur 47 relie la paire de bus 45, 46 à la paire de bus 48, 49, le multiplexeur 58 relie le bus 57 au bus 81 et le multiplexeur 63 relie le bus 62 au bus 67 qui est appliqué à l'entrée d'adresse des modules de mémoire 54LO et 54HI. Le signal R/W étant bas il met ces modules de mémoire en mode écriture, et les sélectionne à travers les portes ET 69 et 72. Les deux modules de mémoire 54LO et 54HI sont écrits simultanément et séquentiellement sous le contrôle du compteur 60, le contenu des voies d'échange 0 sur les bus 32 et 33 étant stocké dans la position 0 des modules 54HO et 54HI, le contenu des voies d'échange 1 étant stocké dans la position 1 des modules 54HO et 54HI, et ainsi de suite.

Pendant la trame n + 1, le signal R/W est haut, le multiplexeur 58 relie le bus 56 au bus 81, le démultiplexeur 47 relie la paire de bus 45, 46 à la paire de bus 50, 51 et le multiplexeur 63 relie le bus 66 au bus 67 qui est appliqué à l'entrée d'adresse des modules 54LO et 54HI. Le signal R/W étant haut, il met les modules de mémoire 54LO et 54HI en mode lecture. Les modules de mémoire 54LO et 54HI sont lus comme expliqué ci-dessous. On suppose que le contenu de la voie d'échange 45 sur le bus LO, qui a été emmagasiné dans la position 45 du module 54LO doit être transféré sur la voie 300 sur le bus LMS-1. Lorsque le compte défini par les neuf bits du compteur 60 atteint la valeur 300, le pointeur de sortie/local emmagasiné à la position 300 de la mémoire de pointeurs 61 est lu. Ce pointeur a la configuration suivante :

| Adresse | LO/HI | Local | Marquage |
|---------|-------|-------|----------|
| 00101101 | 0 | 0 | 1 ou 0 |

Le champ d'adresse spécifie l'adresse 45 et le bit LO/HI spécifie le module 54LO. Le bit local étant à 0, il conditionne la porte de sortie de données des modules de mémoire de la mémoire tampon de sortie MTS-1. Si le bit de marquage est 1, la porte ET 80 est conditionnée et le contenu de la position 45 du module 54HO est placé sur le bus LMS-1. Si le bit de marquage est 0, la sortie de la porte ET 80 est forcée à zéro et un octet zéro est écrit sur le bus LMS-1.

Connexion locale

Une connexion locale permet de transférer le contenu d'une voie sur l'une des liaisons d'interface entrantes LE dans une voie de l'une des liaisons d'interface sortantes LS. Le contenu des 512 voies sur le bus LME-1 est systématiquement chargé dans la mémoire tampon locale MTL-1 sous le contrôle du compteur d'intervalles de temps 60 et le contenu de la mémoire est lu sous le contrôle des pointeurs de sortie/locaux. La mémoire MTL-1 a une structure semblable aux mémoires MTE-1 et MLT-1 et son fonctionnement ne sera pas décrit en détail.

Pendant la trame n, la mémoire tampon 94 est écrite comme expliqué ci-dessous. Pendant le premier intervalle de temps de 488 nanosecondes l'adresse 0 est appliquée par le bus 67 aux deux modules de mémoire 94LO et 94HI. Pendant la première moitié de cet intervalle de temps, le bit de plus faible poids du compteur 60, disponible sur la ligne 752, est 0, seul le module de mémoire 94LO est sélectionné et la voie 0 sur le bus LME-A est chargée dans la position 0 du module de mémoire 94LO. Pendant la seconde moitié de cet intervalle de temps, le bit de plus faible poids du compteur 60 est 1, seul le module de mémoire 94HI est sélectionné et la voie 1 sur le bus LME-1 est chargée dans la position 0 du module de mémoire 95HI. Ce processus se répète pendant toute la durée de la trame n.

Pendant la trame n + 1, la mémoire tampon 94 et la mémoire tampon 54 de la mémoire tampon de sortie MTS-1 sont adressées simultanément par les pointeurs de sortie/locaux, et la sélection de celle de ces deux mémoires qui doit être effectivement lue est contrôlée par le bit local des pointeurs de sortie/locaux. Si par exemple la voie 120 sur le bus LME-1 doit être connectée à la voie 40 sur le bus LMS-1, lorsque le compte défini par les neuf bits du compteur 60 atteint la valeur 40, le pointeur de sortie/local lu de la mémoire de pointeurs 61 a la configuration suivante :

| Adresse | LO/HI | Local | Marquage |
|---------|-------|-------|----------|
| 00111100 | 0 | 1 | 1 ou 0 |

Le champ d'adresse spécifie l'adresse 60 et le bit LO/HI spécifie le module 94LO. Le bit Local la ligne 79 étant 1, il inhibe la sortie du module 54LO qui est adressé en parallèle avec le module 94LO, et conditionne la sortie de ce dernier module. Le contenu de la position 60 du module de mémoire 94L, qui avait été chargée par le contenu de la voie 120 sur le bus LME-1 est donc placé sur le bus 81. Si le bit marquage est 1, la porte ET 80 est conditionnée et le bus 81 est relié au bus LMS-1. Si le bit de marquage est 0 la sortie de la porte ET 80 est forcée à zéro et un octet zéro est placé sur le bus LMS-1.

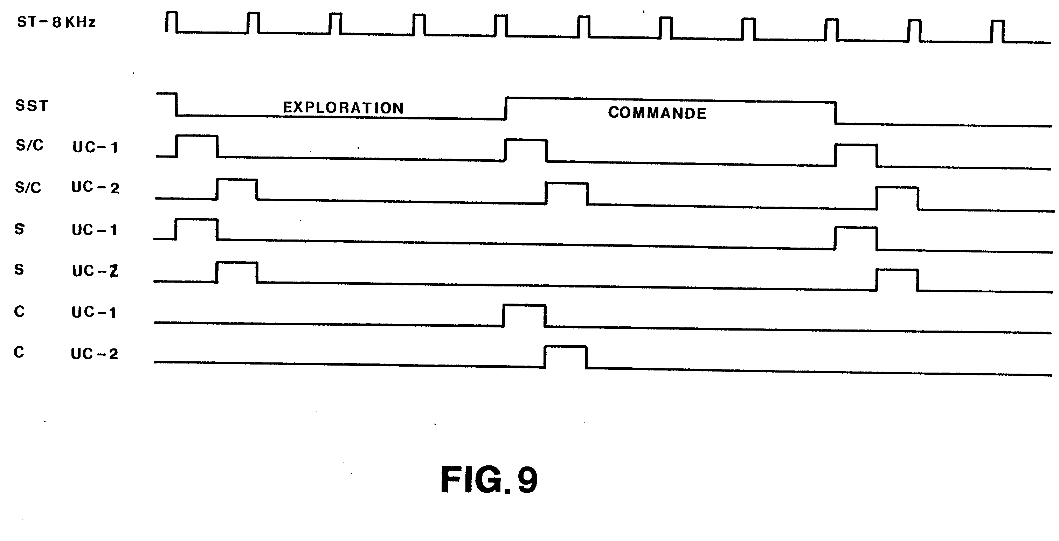

Le dispositif de commande et de chronologie 135 et le contrôleur 20 échangent des messages via la liaison bidirectionnelle 136 en utilisant la technique connue dite « ping-pong » ; au cours d'une période de commande, le contrôleur 20 envoie un message de commande au dispositif 135 et au cours d'une période d'exploration, le dispositif 135 envoie un message d'exploration au contrôleur 20. Dans l'exemple de réalisation illustré sur la figure 10, le temps est divisé en supertrames récurrentes de 1 microseconde et chaque supertrame est divisée en une période d'exploration de 500 microsecondes et une période de commande de 500 microsecondes. La liaison 136 est commune à huit modules de commutation, c'est-à-dire à huit dispositifs 135 et chacune des périodes d'exploration et de commande est divisée en huit périodes affectées respectivement aux huit modules de commutation. On a représenté sur la figure 9 un

**0 112 425**

diagramme des temps qui illustre le fonctionnement de la liaison 136. Les supertrames sont définies par un signal de synchronisation de supertrame SST, les périodes d'exploration et de commande étant définies respectivement par les niveaux bas et haut du signal SST. Sur la figure 9 on a représenté les signaux S/C UC-1, S/C-2 qui définissent les intervalles de temps affectés respectivement aux modules de commutation UC-1 et UC-2, et les signaux S UC-1, S UC-2, C UC-1 et C UC-2 qui définissent respectivement les périodes d'exploration affectées aux modules UC-1 et UC-2 et les périodes de commande affectées à ces modules. Les messages d'exploration et de commande sont des messages de huit octets de huits bits, ce qui amène le bit binaire sur la liaison 136 à 1,024 Mbps.

Format d'un message de commande

    Octet 0

    Bits 0 à 3   Numéro de la liaison bidirectionnelle, non vérifié dans le dispositif 135.
    Bits 4 à 6   Adresse du module de commutation
    Bit  7       Toujours à 1

    Octet 1

        Non utilisé

    Octet 2

    Bit  0       Non utilisé
    Bits 1 à 4   Commande

    Le tableau ci-dessous représente quelques commandes typiques.

    Bits 1  2  3  4
         0  0  0  0   Commande invalide
         0  0  0  1   Ecriture pointeurs entrée
         0  0  1  0   Ecriture pointeurs sortie
         0  1  0  0   Ecriture pointeurs de porte d'anneau
         1  0  1  1   Lecture pointeurs entrée/sortie
         1  1  0  0   Lecture pointeurs de porte d'anneau

    Bit  5       Numéro de commande. Un changement de valeur de ce bit indique une nouvelle commande.
    Bit  6       Non utilisé
    Bit  7       Bit de plus fort poids (MSB) de l'adresse des pointeurs entrée/sortie

    Octet 3

    Bits 0 à 7   Adresse pointeurs entrée/sortie

    Octet 4

    Bit  0       Bit de marquage d'entrée ou de sortie
    Bit  1       Bit local
    Bit  2       Interception porte d'anneau
    Bits 3 à 6   Non utilisés
    Bit  7       Bit LO/HI

    Octet 5

    Bits 0 à 7   Données pointeurs (adresse de la voie d'échange)

    Octets 6 et 7

        Non utilisé

Format d'un message d'exploration

    Octet 0

    Bit  0       Mis à 1 si l'adresse du module est correcte

13

Bits 1 à 4    Adresse liaison en retour
Bits 5 à 7    Adresse module en retour

Octet 1

Bit   0    Dernier numéro de commande
Bit   1    Commande invalide
Bit   2    Vérification synchronisation SST
Bits 3 à 6    Vérification parité
Bit   7    Module de commutation inhibé

Octet 2

Bit   0    Toujours à 1
Bits 1 à 4    Commande en retour
Bit   5    Numéro de commande en retour
Bit   6    Non utilisé
Bit   7    MBS de l'adresse pointeurs entrée/sortie en retour

Octet 3

Bits 0 à 7    Adresse en retour

Octet 4

Bit   0    Bit de marquage d'entrée
Bit   1    Non utilisé
Bit   2    Bit d'interception porte d'anneau
Bits 3 à 6    Non utilisés
Bit   7    Bit LO/HI

Octet 5

Bits 0 à 7    Données en retour

Octet 6

Bit   0    Bit de marquage de sortie
Bit   1    Bit local
Bits 2 à 6    Non utilisés
Bit   7    MSB contenu pointeurs de sortie

Octet 7

Bits 9 à 7    Contenu des pointeurs.

On a représenté sur la figure 10 le bloc diagramme simplifié d'un exemple de réalisation du dispositif de commande et de chronologie 135, qui utilise les messages de commande et d'exploration décrit ci-dessus.

La liaison bidirectionnelle 136 est reliée à une entrée d'une porte ET 140 dont la sortie est appliquée à l'entrée série d'un registre à décalage à 64 étages CMD SR, et à la sortie d'une porte ET 141 dont une entrée est reliée à la sortie série d'un registre à décalage à 64 étages SCAN SR. Le décalage des registres à décalage CMD SR et SCAN SR est commandé respectivement par la sortie de deux portes ET 142 et 143. Le signal de chronologie à 16,384 MHz sur la ligne 19 (figure 1) est appliqué à un compteur à quatorze étages 144 qui est synchronisé par le signal ST. Le compteur 144 est couplé à un circuit de décolage 145 qui fournit les signaux de chronologie nécessaires au fonctionnement du dispositif de la figure 7, et notamment les signaux SST, CLK1 et CLK2, et des signaux de chronologie à 1,024 MHz désignées CLK1/2 et CLK2/2. Le circuit de décolage 145 a aussi trois sorties qui sont reliées par des lignes 146 à un comparateur 147 qui reçoit aussi l'adresse du module de commutation par trois lignes 148. La sortie du comparateur 147 est appliquée à une entrée de deux portes ET 149 et 150 qui reçoivent aussi respectivement le signal SST et son inverse fourni par un inverseur 151. La sortie de la porte ET 149 est appliquée aux portes ET 140 et 142 et la sortie de la porte ET 150 est appliquée aux portes ET 141 et 143.

Le registre à décalage CMD SR est couplé à un registre d'en tête à sept étages 152 qui reçoit les bits 0 à 6 de l'octet 0 du message de commande, un registre de commande à cinq étages 153 qui reçoit les bits 1 à 5 de l'octet 2 du message de commande, un registre d'adresse à neuf étages 154 qui reçoit le bit 7 de

14

l'octet 2 et les huit bits de l'octet 3 du message de commande et un registre de données à douze étages 155 qui reçoit les bits 0, 1, 2, 7 de l'octet 4 et tous les bits de l'octet 5 du message de commande. Le registre à décalage SCAN SR est couplé à un registre d'exploration à 64 bits 156. Le signal de synchronisation SST est synchronisé avec le signal de synchronisation ST comme illustré sur la figure 9. Lorsque le signal SST est haut, les portes ET 150 et 141 ont leur sortie forcée à zéro. L'état des trois lignes d'adresse 148 est représentatif de l'adresse du module de commutation ; cette adresse peut avoir une des huit valeurs différentes. lorsque l'adresse fournie par le circuit de décodage 145 sur les lignes 146 correspond à celle spécifiée sur les lignes d'adresse 148, la sortie du comparateur passe au niveau haut fournissant le signal S/C UC-1 de la figure 9. La sortie de la porte 149 passe au niveau haut et garde ce niveau pendant 62,5 microsecondes, comme illustré par le signal C UC-1 sur la figure 9. Pendant ces 62,5 microsec., les bits du message de commande sur la ligne 136 sont chargés dans le registre à décalage CMD SR sous la commande du signal CLK1/2 qui est un signal de chronologie à 1,024 Mbps qui résulte de la division par 2 du signal de chronologie CLK1. A la fin des 62,5 microsecondes le registre à décalage CMD SR est déconnecté de la ligne 136 par la porte ET 140 et son contenu est transféré dans les registres 152 et 155 comme expliqué plus haut et au moyen de portes de transfert non représentées. Le dispositif 135 dispose alors de 500-62,5 = 437,5 microsecondes pour traiter la commande. Les bits 4 à 6 de l'octet 0 emmagasinés dans le registre 152 sont comparés à l'état des lignes d'adresse 148 dans un comparateur 157 et si le résultat de la comparaison est négatif, la commande n'est pas exécutée et le bit 0 de l'octet 0 du message d'exploration dans le registre 156 est mis à 0. Si le résultat de la comparaison est positif le bit 0 de l'octet 0 du message d'exploration est mis à 1 et différentes portes non représentés qui permettent l'exécution de la commande sont conditionnées. Le bit de numéro de commande stocké dans le registre de commande 153 est comparé avec le bit de numéro de commande du message de commande précédent qui est stocké dans une bascule à verrouillage 158, au moyen du circuit OU Exclusif 159. Si ces deux bits sont identiques la commande n'est pas exécutée. Si ces deux bits sont différents le bit de numéro de commande est stocké dans la bascule 158 et la commande est exécutée. On décrira à titre d'exemple l'exécution d'une commande d'écriture de pointeurs d'entrée. Un circuit de décolage 160 couplé au registre de commande 153 lève une ligne 161 qui est appliquée à une porte NON ET 162. L'adresse stockée dans le registre d'adresses 154 est comparée dans un comparateur 163 avec le contenu du compteur d'intervalles de temps 60 (figure 7) qu'il reçoit par le bus 115. Lorsque le résultat de la comparaison est positif, la sortie du comparateur 163 passe au niveau haut et un niveau bas est produit à la sortie de la porte NON ET 162. Ce niveau bas est appliqué par la ligne 164 à l'entrée lecture/écriture de la mémoire de pointeurs d'entrée MPE-1 et est utilisé pour inhiber la porte de sortie de données de cette mémoire. Les bits d'adresses 0 à 7 de l'octet 5, et les bits 7 et 0 de l'octet 9, stockés dans le registre de données 155 sont écrits dans la mémoire de pointeurs d'entrée MPE-1 via un bus 165, à l'adresse spécifiée par le compteur d'intervalles de temps 60. Le contenu du registre d'exploration est chargé pendant l'exécution de la commande puis transféré dans le registre à décalage SCAN SR par des moyens connus non représentés sur la figure. Lorsque le signal S UC-1 produit par la porte ET 150 passe au niveau haut, le contenu du registre à décalage SCAN SR est lu sur la liaison 136 au rythme fourni par le signal de chronologie CLK2/2 qui résulte de la division par 2 du signal de chronologie CLK2. L'homme de l'art comprendra aisément la façon de réaliser les diverses commandes en utilisant la description des formats des messages de commande et d'exploration à l'exemple décrit ci-dessus.

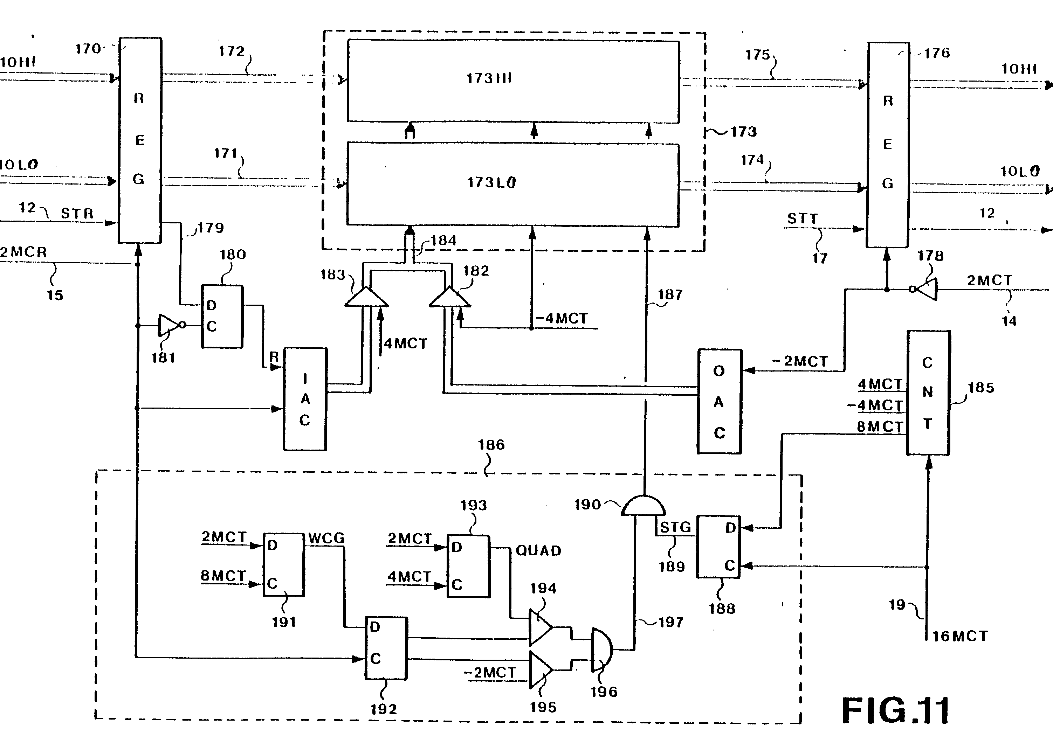

On a représenté sur la figure 11 le bloc diagramme détaillé du dispositif de bouclage 11 de la figure 1. Le contenu des bus 10HI et 10LO amont et celui de la ligne de synchronisation amont 12 est chargé dans un registre à dix sept bits 170 sous le contrôle du signal de chronologie à 2,048 MHz reçu de la ligne de chronologie 15 amont. On désignera par la suite ce signal de chronologie par 2MCR. Les sorties du registre 170 qui correspondent aux bus 10LO et 10HI sont appliquées par deux bus 171 et 172 à l'entrée de données de deux modules de mémoires de 256 × 8 bits référencés 173LO et 173HI qui constituent une mémoire 173. Les sorties de données des mémoires 173LO et 173LI sont appliquées par deux bus 174 et 175 à un registre à dix-sept étages 176 qui reçoit aussi le signal de synchronisation de trame à transmettre qui est fourni par le dispositif de chronologie 13 sur une ligne 17 et que l'on désignera par STT. Les sorties du registre 176 qui correspondent aux bus 174, 175 et à la ligne 17 sont appliquées respectivement aux bus 10H0 et 10HI aval et à la ligne de synchronisation aval 12. Le contenu des bus 174 et 175 et celui de la ligne 17 est chargé dans le registre 176 sous le contrôle d'un signal de chronologie noté -2MCT qui résulte de l'inversion par un inverseur 178 du signal de chronologie à 2,048 MHz fourni par le dispositif de chronologie 13 sur la ligne 14 et noté 2MCT. La sortie du registre 170 qui correspond à la ligne de synchronisation de trame 12 est appliquée par une ligne 179 à l'entrée D d'une bascule de type D 180 dont l'entrée d'horloge C reçoit le signal -2MCR résultant de l'inversion du signal 2MCR par un inverseur 181. Le signal 2MCR est appliquée à l'entrée d'un compteur d'adresses d'entrée à huit bits IAC qui est remis à zéro par la sortie de la bascule 180. Le signal -2MCT est appliqué à un compteur d'adresses de sortie OAC dont la sortie est appliquée à une porte ET 182. La sortie du compteur IAC est appliquée à une porte ET 183. Les sorties des portes ET 182 et 183 sont reliées entre elles et à un bus 184 qui est appliqué à l'entrée d'adresse des modules de mémoire 173LO et 173HI. Un signal de chronologie à 16,384 MHz fourni par le dispositif de chronologie 13 et noté 16MCT, est appliqué à un compteur 185 qui en dérive un signal à 4,096 MHz noté 4MCT, le signal inverse de ce dernier, -4MCT, et un signal à 8,192 MHz noté 8MCT. Le signal -4MCT est appliqué à l'entrée lecture/écriture des modules de mémoire 173Lo et 173HI et à la porte

0 112 425

ET 182. Le signal 4MCT est appliqué à la porte ET 183. Les signaux 16MCT, 8MCT, 4MCT, 2MCT, -2MCT et 2MCR sont appliqués à un dispositif de sélection de cycle d'écriture 186 dont la sortie est reliée par une ligne 187 à l'entrée de sélection des modules de mémoire 173LO et 173HI. Dans le dispositif 186, les signaux 8MCT et 16MCT sont appliqués respectivement aux entrées D et C d'une bascule de type D 188 dont la sortie vraie produit un signal STG qui est appliqué par une ligne 189 à une entrée d'une porte OU 190 dont la sortie est reliée à la ligne 187. Les signaux 2MCT et 8MCT sont appliqués respectivement aux entrées D et C d'une bascule de type D 191 dont la sortie vraie produit un signal WCG qui est appliqué à l'entrée D d'une bascule de type D dite de sélection 192 dont l'entrée C reçoit le signal 2MCR. Les signaux 2MCT et 4MCT sont appliqués respectivement aux entrées D et C d'une bascule de type D 193 dont la sortie vraie produit un signal noté QUAD qui est appliqué avec la sortie vraie de la bascule 192 à une porte ET 194. Le signal -2MCT et la sortie complémentaire de la bascule 192 sont appliqués à une porte ET 195. Les sorties des portes ET 194 et 195 sont appliquées à une porte OU 196 dont la sortie est appliquée à la porte OU 190 par une ligne 197.

La fonction première du dispositif de bouclage 11 est de maintenir constant et égal à 125 microsecondes le délai de propagation des voies d'échange le long de l'anneau. Le dispositif 11 utilise comme références les signaux produits par le dispositif de chronologie maître 13, à savoir le signal de chronologie 2MCT et le signal de synchronisation de trame STT, et envoie les voies d'échange sur l'anneau en synchronisme avec ces deux signaux. Le dispositif 11 reçoit les voies d'échange de l'anneau en synchronisme avec le signal à 2,048 MHz reçu, noté 2MCR et avec le 1 de synchronisation de trame reçu STR. La fonction du dispositif 11 est donc de resynchroniser les voies d'échange reçues de l'anneau sur les signaux de référence qu'il utilise, pour retransmission sur l'anneau.

Le dispositif de bouclage 11 est articulé autour de la mémoire tampon 173, qui fonctionne comme une mémoire tampon élastique. Le contenu des voies d'échange reçues est stocké dans la mémoire tampon aux adresses fournies par le compteur IAC qui fonctionne en synchronisme avec le signal de chronologie reçu 2MCR. La mémoire tampon est lue sur l'anneau sous le contrôle du compteur OAC qui fonctionne en synchronisme avec le signal de chronologie transmis 2MCT. Comme la relation de phase entre les signaux de chronologie transmis et reçus peut être quelconque, il peut y avoir contention entre les opérations d'écriture et de lecture de la mémoire-tampon. Cette contention est résolue en utilisant le principe suivant : la durée de chaque intervalle de temps d'échange (488 ns) est divisée en trois périodes, une période de lecture de la mémoire tampon et deux périodes d'écriture, et l'une des deux périodes d'écriture est sélectionnée pour réellement effectuer l'écriture de la mémoire en fonction de la relation de phase entre les signaux de chronologie transmis et reçus. Dans la réalisation, illustrée sur la figure 11, et pour des raisons pratiques, chaque intervalle de temps d'échange est divisé en quatre périodes de durées égales dites quart temps, deux périodes de lecture dont une seule est effectivement utilisée et deux périodes d'écriture désignées par WA et WB.

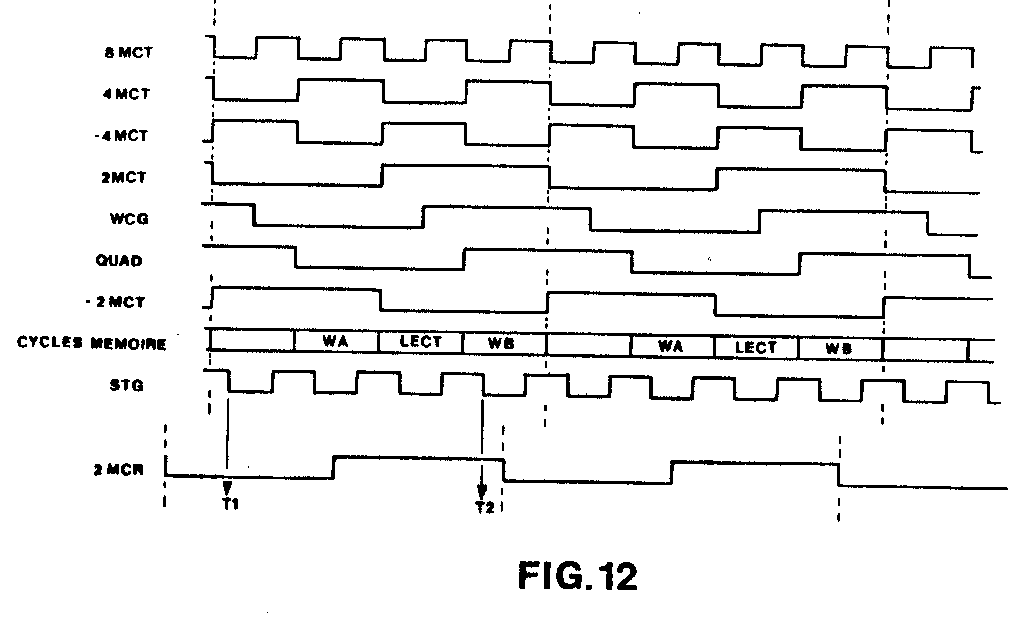

On décrira maintenant le fonctionnement détaillé du dispositif de la figure 11 en se référant aux diagrammes des temps représentés sur la figure 12. La mémoire tampon 173 n'est adressé effectivement que lorsque son entrée de sélection est au niveau bas. Elle fonctionne en mode lecture ou écriture selon que son entrée lecture/écriture est au niveau haut ou bas respectivement.

Opération de Lecture

Pendant le premier quart temps, le signal -4MCT est au niveau haut conditionnant la mémoire tampon 173 en mode lecture, mais les signal QUAD et -2MCT sont hauts forçant l'entrée de sélection de la mémoire-tampon 173 à un niveau haut qui inhibe celle-ci. Pendant le troisième quart temps, le signal -4MCT est au niveau haut conditionnant la mémoire tampon 173 en mode de lecture et conditionnement la porte ET 182. Les signaux QUAD et -2MCT sont bas forçant la ligne 197 au niveau bas. Quand le signal STG sur la ligne 189 passe au niveau bas, la mémoire tampon 173 est sélectionnée par un niveau bas sur la ligne 187 et les positions des modules de mémoire 173LO et 173HI adressées par le contenu du compteur OAC sont lues sur les bus 171 et 175. Le contenu de ces bus est chargé dans le registre de sortie 176 à la transition positive suivante du signal -2MCT.

Opération d'Ecriture

La sélection entre les second et quatrième quart temps pour écrire la mémoire tampon est réalisée en divisant chaque intervalle de temps d'échange en un première et un second intervalles de temps d'observation qui englobent respectivement les second et quatrième quart temps et en choisissant les quatrième et second quart temps selon que les voies d'échange reçues sont chargées dans le registre d'entrée 170 pendant le premier ou second intervalles de temps d'observation. Le chargement du registre d'entrée 170 est commandé par la transition positive du signal 2MCR. Les premier et second intervalles de temps d'observation sont déterminés par le signal WCG qui est respectivement bas et haut pendant les premier et second intervalles de temps d'observation. Si le signal WCG est haut à la transition positive du signal 2MCR, la bascule de sélection 192 est mise à 1 et les sorties vraie et complémentaire de la bascule 192 sont respectivement haute et basse. L'ensemble des portes 194, 195, 196 se comporte comme un sélecteur qui transfère sur la ligne 197 le signal QUAD ou le signal -2MCT selon que la bascule de sélection est à 1 ou à 0.

On a illustré sur la figure 12 le cas où la transition du signal 2MCR se produit lorsque le signal WCG est bas. Les sorties vraie et complémentaire de la bascule 192 sont respectivement basse et haute et le signal -2MCT est appliqué sur la ligne 197. Pendant le second quart temps rien ne se produit car le signal -2MCT sur la ligne 197 inhibe la mémoire tampon. Pendant le troisième quart temps, le signal -2MCT est bas et la mémoire fonctionne en mode lecture comme déjà décrit. Pendant le quatrième quart temps le signal 4MCT est haut conditionnant la porte ET 183 qui permet à l'adresse fournie par le compteur IAC d'être appliquée à l'entrée d'adresse des modules de mémoire 173LO et 173HI qui sont en mode écriture. Lorsque le signal STG passe au niveau bas le contenu des bus 171 et 172 est écrit dans les modules de mémoires 173LO et 173HI à l'adresse définie par le compteur IAC.

Si la transition positive du signal 2MRCR se produit pendant que WCG est haut, le contenu des voies d'échange reçues sera écrit dans la mémoire tampon 173 pendant le second quart temps qui suit l'apparition de cette transition. Par exemple, en se référant à la figure 12 si la transition positive de 2MCR se produit en T1, la mémoire-tampon sera écrite pendant le second quart temps de ce même intervalle de temps d'échange. Si la transition positive de 2MCR se produit en T2, la mémoire-tampon sera écrite pendant le second quart temps de l'intervalle de temps d'échange suivant.

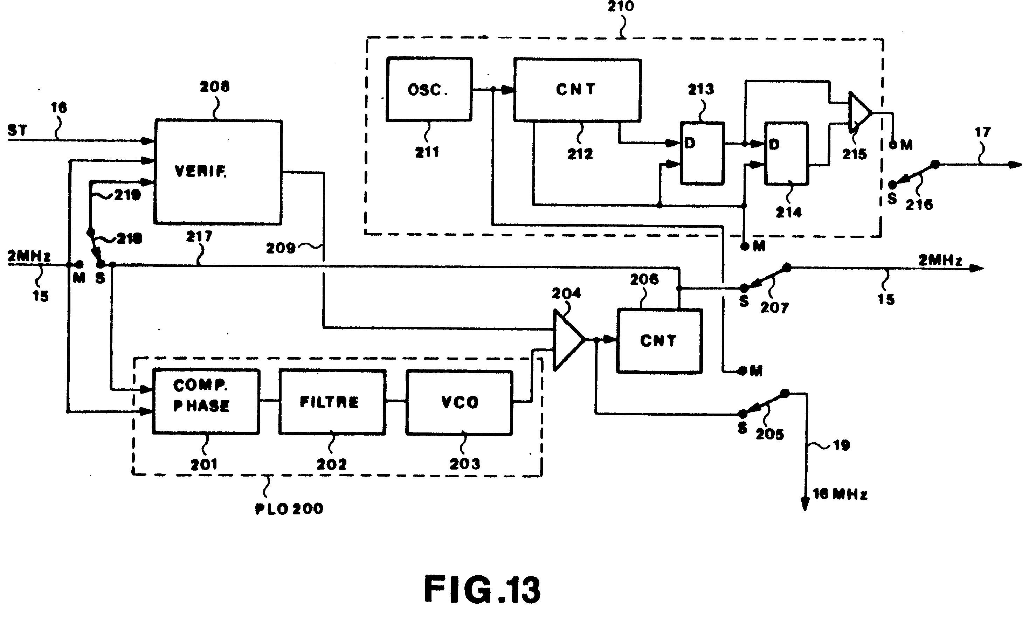

On a représenté sur la figure 13 le bloc diagramme d'un dispositif de chronologie qui montre la réalisation des dispositifs de chronologie maître-esclave 13 et 18. Le signal de chronologie à 2,048 MHz sur la ligne de chronologie 15 amont est appliqué à un oscillateur à verrouillage de phase PLO 200 constitué de façon connue par un comparateur de phase 201, un filtre de boucle 202 et un oscillateur commandé en tension VCO 230 dont la fréquence nominale est 16,384 MHz. La sortie du VCO 203 est appliquée à une porte ET 204 dont la sortie est reliée au pôle, noté S, d'un commutateur à deux pôles 205 dont le pôle commun est relié à la ligne 19 (figure 1). La sortie de la porte ET 204 est aussi appliquée à un compteur à trois étages 206 dont la sortie est reliée par une ligne 217 à l'autre entrée du comparateur de phase 201, au pôle, noté S, d'un commutateur à deux pôles 207 dont le pôle commun est relié à la ligne de chronologie aval 15, et au pôle, noté S, d'un commutateur à deux pôles 218. Les lignes 15 et 16 sont appliquées à un dispositif de vérification de chronologie 208 dont on trouvera un exemple de réalisation dans la demande de brevet européen EP-A-0 112 426 déposée conjointement à celle-ci par la demanderesse et qui décrit et revendique un tel dispositif de chronologie. La sortie du dispositif 208 est reliée par une ligne 209 à une entrée de la porte ET 204. La ligne 15 est aussi reliée à l'autre pôle, noté M, du commutateur 218 dont le pôle commun est relié au dispositif 208 par une ligne 219. Une source de chronologie 210 est constituée par un oscillateur maître à quartz 211 de fréquence nominale 16,384 MHz et un compteur à onze étages 212 commandé par la sortie de l'oscillateur 211 qui est reliée aussi à l'autre pôle, noté M, du commutateur 205. Le troisième étage du compteur 212 est relié au pôle M du commutateur 207 et à l'entrée d'horloge de deux bascules de type D 213 et 214. Le onzième étage du compteur 212 est relié à l'entrée D de la bascule 213 dont la sortie vraie est reliée à l'entrée D de la bascule 214. La sortie vraie de la bascule 213 et la sortie complémentaire de la bascule 214 sont appliquées à une porte ET 215 dont la sortie est reliée à un pôle, noté M, d'un commutateur à deux pôles 216. Ce dernier a l'autre pôle, noté S, libre, et le pôle commun relié à la ligne 17 (figure 1).

Dans un dispositif de chronologie esclave 18, les commutateurs 205, 207, 216 et 218 sont en position S et la source de chronologie n'existe pas. Le signal de chronologie à 2,048 MHz sur la ligne 15 est appliqué au PLO 200 qui produit un signal de chronologie filtré à 16,384 MHz de façon connue. En fonctionnement normal, la ligne 209 est haute et le signal produit sur le PLO est distribué à tous les éléments de l'unité de commutation par la ligne 19 (figure 1). La sortie du compteur 206 produit un signal de chronologie à 2,048 MHz régénéré qui est appliqué en réaction à l'entrée du PLO 200 de façon connue, et à la ligne de chronologie 15 aval. Lorsque le signal de chronologie sur la ligne 15 amont est absent ou est tel qu'il ne puisse plus commander le PLO 200 de façon correcte ou d'un manière plus générale lorsque le signal de chronologie est défectueux, cet état est détecté par le dispositif de vérification de chronologie 208 qui fait passer la ligne 209 au niveau bas bloquant la porte ET 204 et interrompant la distribution du signal de chronologie sur la ligne de chronologie 15 aval et celle du signal à 16,384 MHz aux éléments de l'unité de commutation. Le signal sur la ligne 209 est aussi envoyé au contrôleur 20. Dans un dispositif de chronologie esclave, le dispositif de vérification de chronologie 208 vérifie aussi le synchronisme entre le signal de synchronisation de trame sur la ligne 16 et le signal de chronologie régénéré qui lui est appliqué à travers la ligne 217, le commutateur 218 en position S, et la ligne 219. Si ces deux signaux ne sont pas en synchronisme le dispositif 208 baisse la ligne 209.

Dans un dispositif de chronologie maître 13, les commutateurs 205, 207, 216 et 218 sont en position M, et le PLO 200 et le compteur 206 n'existent pas. Le signal à 16,384 MHz est fourni par l'oscillateur maître à quartz 211. Le signal de chronologie à 2,048 MHz appliqué à la ligne de synchronisation aval 15 est fourni par le compteur 212, et le signal sur la ligne relié au onzième étage du compteur 212 est un signal à 8 kHz avec un cycle bas/haut de 50 %. Sur la sortie vraie de la bascule 213 on retrouve ce signal synchronisé avec le signal à 2,048 MHz et sur la sortie complémentaire de la bascule 214 on retrouve le signal de sortie de la bascule 213, inversé retardé de la période du signal à 2,048 MHz, c'est-à-dire retardé de 488 nanosecondes. On obtient ainsi en sortie de la porte ET 215 un train d'impulsions à 8 kHz, chaque impulsion ayant une largeur de 488 nanosecondes. Ce train d'impulsions constitue le signal de synchronisation de trame qui est appliqué au dispositif de bouclage 11 par la ligne 17. Le dispositif de vérification de chronologie 208 vérifie le signal de chronologie sur la ligne de chronologie amont 15 et le synchronisme entre le signal de synchronisation de trame sur la ligne 16 et le signal de chronologie sur la ligne 15 qui lui est appliqué à travers le commutateur 218 en position M et la ligne 219. En cas de défaillance de l'un de ces signaux le dispositif 208 en informe le contrôleur 20.

**Revendications**

1. Réseau de connexion pour connecter sélectivement au moins une voie temporelle entrante sur une liaison multiplex entrante (LME) à au moins une voie temporelle sortante sur une liaison multiplex sortante (LMS), du type comprenant plusieurs modules de commutation, chacun d'eux étant relié à une liaison multiplex entrante et à la liaison multiplex sortante correspondante et comprenant un commutateur temporel d'entrée comprenant une mémoire de pointeurs d'entrée (MPE) et une mémoire tampon d'entrée (MTE), un commutateur temporel de sortie comprenant une mémoire de pointeurs de sortie (MPS) et une mémoire tampon de sortie (MTS), et des moyens de commande (135) pour commander les commutateurs temporels d'entrée et de sortie en réponse à des messages de commande reçus d'un contrôleur (20), réseau de connexion caractérisé en ce qu'il comprend :
une liaison unidirectionnelle en boucle (10) fonctionnant en multiplex temporel avec des trames récurrentes de durées égales et sur laquelle circule continuellement un message multiplex dont la durée est égale à celle d'une trame et qui comprend n voies temporelles d'échange,
une liaison de synchronisation en boucle (12) sur laquelle circule un signal de synchronisation de trame en synchronisme avec le message multiplex, et
des moyens de bouclage (11) pour maintenir constant et égal la durée d'une trame le temps de propagation d'un message multiplex autour de la liaison unidirectionnelle en boucle (10),
réseau de connexion caractérisé en outre en ce que :
chaque module de commutation comprend un compteur d'intervalles de temps (60) synchronisé par le signal de synchronisation de trame, pour assurer le synchronisme entre les commutateurs temporels d'entrée et de sortie, des moyens de porte et des moyens de commande, et des moyens de porte d'anneau qui comprennent une mémoire de pointeurs de porte (MPP) adressée cycliquement à chaque trame par le compteur d'intervalles de temps, et des moyens de transfert (PA) pour connecter sélectivement la sortie du commutateur temporel d'entrée à la liaison unidirectionnelle en boucle sous la commande des pointeurs de porte lus de la mémoire de pointeurs de porte,
la mémoire de pointeurs d'entrée (MPE) est adressée cycliquement à chaque trame par le compteur d'intervalles de temps, et emmagasine des pointeurs d'entrée, chacun d'eux comprenant une adresse, le pointeur d'entrée emmagasiné dans la $n^{ième}$ positon de la mémoire de pointeurs d'entrée comprenant une adresse représentative du numéro de la voie d'échange à laquelle la $n^{ième}$ voie entrante est connectée,
la mémoire tampon d'entrée (MTE), reçoit le contenu des voies temporelles entrantes qui est inscrit cycliquement à chaque trame aux adresses spécifiées par les pointeurs d'entrée lus de la mémoire de pointeurs d'entrée, et est lue cycliquement à chaque trame et séquentiellement sous la commande du compteur d'intervalles de temps,
la mémoire de pointeurs de sortie (MPS) est adressée cycliquement à chaque trame par le compteur d'intervalle de temps, et emmagasine des pointeurs de sortie, chacun d'eux comprenant une adresse, le pointeur de sortie emmagasiné dans la $n^{ième}$ position de la mémoire de pointeurs de sortie comprenant une adresse représentative du numéro de la sortante à laquelle la $n^{ième}$ voie d'échange est connectée, et
la mémoire tampon de sortie (MTS), reçoit le contenu des voies d'échange qui est inscrit cycliquement à chaque trame sous la commande du compteur d'intervalles de temps, et est lue cycliquement à chaque trame et séquentiellement sous la commande des pointeurs de sortie lus de la mémoire de pointeurs de sortie.

2. Réseau de connexion selon la revendication 1, caractérisé en ce que chaque module de commutation comprend un commutateur temporel local qui comprend :
une mémoire de pointeurs locaux (MPL) adressée cycliquement à chaque trame par le compteur d'intervalles de temps, et emmagasinant des pointeurs locaux, chacun d'eux comprenant une adresse, le pointeur local emmagasiné dans la $n^{ième}$ position de la mémoire de pointeurs locaux comprenant une adresse représentative du numéro de la voie sortante à laquelle la $n^{ième}$ voie entrante est connectée, et
une mémoire tampon locale (MTL) dans laquelle le contenu des voies entrantes sur la liaison multiplex entrante est inscrit cycliquement à chaque trame et séquentiellement sous la commande du compteur d'intervalles de temps et dont le contenu est lu cycliquement à chaque trame sous la commande de pointeurs locaux lus de la mémoire de pointeurs locaux.

3. Réseau de connexion selon la revendication 2 caractérisé en ce que la mémoire de pointeurs de sortie et la mémoire de pointeurs locaux sont constitués par une même mémoire de pointeurs (61) emmagasinant des pointeurs, chacun d'eux comprend une adresse et un bit indicateur (Local) qui spécifie si le pointeur est un pointeur de sortie ou un pointeur local.

4. Réseau de connexion selon la revendication 1 caractérisé en ce qu'il comprend des premiers

**0 112 425**

moyens de porte (107, 108) intercalés entre la liaison multiplex entrante et la mémoire tampon d'entrée et en ce que les pointeurs d'entrée comprennent un bit de marquage qui, s'il a une première valeur, conditionne les premiers moyens de porte pour qu'ils connectent la liaison multiplex entrante à l'entrée de la mémoire tampon d'entrée, et qui s'il a la valeur opposée à ladite première valeur, force la sortie des premiers moyens de porte à zéro, forçant ainsi l'écriture d'un zéro dans la mémoire tampon d'entrée.

5. Réseau de connexion selon la revendication 1, caractérisé en ce qu'il comprend des seconds moyens de porte (80) intercalés entre la liaison multiplex sortante et la sortie de la mémoire tampon de sortie, et en ce que les pointeurs de sortie comprennent un bit de marquage qui, s'il a une première valeur, conditionne les seconds moyens de porte (80) pour qu'ils connectent la sortie de la mémoire tampon de sortie à la liaison multiplex sortante, et qui, s'il a la valeur opposée à ladite première valeur, force la sortie des seconds moyens de porte (80) à zéro forçant une sortie zéro sur la liaison multiplex sortante.

6. Réseau de connexion selon la revendication 3, caractérisé en ce qu'il comprend des moyens de porte (80) intercalés entre les sorties des mémoires tampons de sortie et locale et la liaison multiplex sortante, et en ce que lesdits pointeurs comprennent un bit de marquage qui, s'il a une première valeur, conditionne les moyens de porte (80) pour qu'ils connectent les sorties des mémoires tampons de sortie et locale à la liaison multiplex sortante, et qui, s'il a la valeur opposée à ladite première valeur force la sortie des moyens de porte (80) à zéro, forçant une sortie zéro sur la liaison multiplex sortante.

7. Réseau de connexion selon les revendications 1 ou 2 caractérisé en ce que chacune des mémoires tampons d'entrée, de sortie et locale est constituée par deux mémoires tampons, chacune d'elle fonctionnant en mode d'écriture pendant une trame pendant que l'autre fonctionne en mode de lecture.

8. Réseau de connexion selon l'une quelconque des revendications précédentes, caractérisé en ce que pour établir une communication bidirectionnelle entre une première station à laquelle sont affectées une première voie entrante sur une première liaison multiplex entrante et une première voie sortante sur une première liaison multiplex sortante, les premières liaisons multiplex entrante et sortante étant attachées à une premier module de commutation, et une seconde station à laquelle sont affectées une seconde voie entrante sur une seconde liaison multiplex entrante et une seconde voie sortante sur une seconde liaison multiplex sortante, les secondes liaisons multiplex entrante et sortante étant attachées à un second module de commutation, les adresses contenues dans les pointeurs d'entrée et de sortie correspondant aux premières voies entrante et sortante dans le premier module de commutation, et les adresses contenues dans les pointeurs d'entrée et de sortie correspondant aux secondes voies entrante et sortante, dans le second module de commutation, spécifient l'adresse de la même voie d'échange.

9. Réseau de connexion selon l'une des revendications 1 à 7, caractérisé en ce que pour établir une communication de diffusion entre une station émettrice à laquelle est affectée une première voie entrante sur une première liaison multiplex entrante et plusieurs stations réceptrices auxquelles sont affectées des voies sortantes sur différentes liaisons multiplex sortantes, l'adresse contenue dans le pointeur d'entrée correspondant à ladite première voie entrante, et celle contenu dans les pointeurs de sortie correspondant aux voies sortantes affectées aux stations réceptrices, spécifient l'adresse de la même voie d'échange.

10. Réseau de connexion selon l'une quelconque des revendications 1 à 7, caractérisé en ce que pour établir une communication de collecte entre plusieurs stations émettrices et une station réceptrice, une seule station émettrice émet à instant donné, et les adresses contenues dans les pointeurs d'entrée correspondant aux voies entrantes affectées aux stations émettrices et celle contenue dans le pointeur de sortie correspondant à la voie sortante affectée à la station réceptrice, spécifient l'adresse de la même voie d'échange.

**Claims**

1. A switching network for selectively connecting at least one input time-division channel on an input multiplex link (IML) to at least one output time-division channel on an output multiplex link (OML), of the type comprising a plurality of switching modules connected each to an input multiplex link and to the corresponding output multiplex link and including an input time-division switch comprising an input pointer memory (IPM) and an input buffer (IB), an output time-division switch comprising an output pointer memory (OPM), and control means (135) responsive to control messages received from a controller (20) to control the input and output time-division switches, said switching network being characterized in that it comprises :

a unidirectionnal closed-loop link (10) operating in the time-division multiplex mode with recurrent frames of equal duration and arranged for continuous circulation thereon of a multiplex message the duration of which equals that of a frame and which includes n time-division exchange channels,

a closed-loop synchronization link (12) on which circulates a frame synchronizing signal synchronized with the multiplex message, and

ring control means (11) for causing the time taken by a multiplex message to travel around the unidirectional closed-loop link (10) to remain constant and equal to the duration of a frame,

said switching network being further characterized in that :

each switching module comprises a time slot counter (60) synchronized with the frame synchronizing signal to provide synchronization between the input and output time-division switches, gate means and control means, and ring gate means including a gate pointer memory (GPM) cyclically addressed at the occurrence of each frame by the time slot counter, and transfer means (RG) for selectively connecting the output of the input time-division switch to the unidirectional closed-loop link under the control of the gate pointers read out of the gate pointer memory,

the input pointer memory (IPM) is cyclically addressed by the time slot counter at the occurrence of each frame and stores input pointers comprising each an address, with the input pointer stored in the $n^{th}$ location of the input pointer memory including an address representative of the number of the exchange channel to which the $n^{th}$ input channel is connected,

the input buffer (IB) receives the contents of the input time-division channels that are cyclically written therein at the occurrence of each frame at the addresses specified by the input pointers read out of the input pointer memory, with the contents of the input buffer being cyclically and sequentially read out at the occurrence of each frame under the control of the time slot counter,

the output pointer memory (OPM) is cyclically addressed by the time slot counter at the occurrence of each frame and stores output pointers comprising each an address, with the output pointer stored in the $n^{th}$ location of the output pointer memory including an address representative of the number of the output channel to which the $n^{th}$ exchange channel is connected, and

the output buffer (OB) receives the contents of the exchange chanels that are cyclically writen therein at the occurrence of each frame under the control of the time slot counter, with the contents of the output buffer being cyclically and sequentially read out at the occurrence of each frame under the control of the output pointers read out of the output pointer memory.

2. A switching network according to claim 1, charactrized in that each switching module includes a local time-division switch comprising :

a local pointer memory (LPM) that is cyclically addressed by the time slot counter at the occurrence of each frame and stores local pointers including each an address, with the local pointer stored in the $n^{th}$ location of the local pointer memory including an address representative of the number of the output channel to which the $n^{th}$ input channel is connected, and

a local buffer (LB) in which the contents of the input channels on the input multiplex link are cyclically and sequentially written at the occurrence of each frame under the control of the time slot counter, with the contents of the local buffer being cyclically read out at the occurrence of each frame under the control of local pointers read out of the local pointer memory.

3. A switching network according to claim 2, characterized in that the output pointer memory and the local pointer memory consist of the same pointer memory (61) storing pointers each of which includes an address and a flag (local) bit specifying whether the pointer is an output pointer or a local one.

4. A switching network according to claim 1, characterized in that it comprises first gate means (107, 108) inserted between the input multiplex link and the input buffer, and in that the input pointers include a marker bit which, when set to a first value, enables the first gate means to connect the input multiplex link to the input of the input buffer, and which, when set to the opposite value, forces the output of the first gate means to zero, thereby causing an all-zero byte to be written into the input buffer.

5. A switching network according to claim 1, characterized in that it comprises second gate means (80) inserted between the output multiplex link and the output of the output buffer, and in that the output pointers include a marker bit which, when set to a first value, enables the second gate means (80) to connect the output of the output buffer to the output multiplex link, and which, when set to the opposite value, forces the output of the second gate means (80) to zero, thereby causing an all-zero byte to be sent over the output multiplex link.

6. A switching network according to claim 3, characterized in that it comprises gate means (80) inserted between the outputs of the output and local buffers and the output multiplex link, and in that said pointers include a marker bit which, when set to a first value, enables the output gates (80) to connect the outputs of the output and local buffers to the output multiplex link, and which, when set to the opposite value, forces the output of the gate means (80) to zero, thereby causing an all-zero byte to be sent over the output multiplex link.

7. A switching network according to claim 1 or 2, characterized in that the input, output and local buffers are each comprised of two buffers, one of which operates in the Write mode during a frame while the other operates in the Read mode.

8. A switching network according to any one of the preceding claims, characterized in that, to establish a bidirectional communication between a first station, to which a first input channel on a first input multiplex link and a first output channel on a first output multiplex link have been allocated, the first input and output multiplex links being attached to a first switching module, and a second station, to which a second input channel on a second input multiplex link and a second output channel on a second output multiplex link have been allocated, the second input and output multiplex links being attached to a second switching module, the addresses contained in the input and output pointers corresponding to the first input and output channels in the first switching module, and the addresses contained in the input and output pointers corresponding to the second input and output channels in the second switching module, specify the address of the same exchange channel.

9. A switching network according to any one of claims 1 to 7, characterized in that, to establish a « broadcast » type of communication between one transmitting station, to which a first input channel on a first input multiplex link has been allocated, and a plurality of receiving stations, to which output channels on various output multiplex links have been allocated, the address contained in the input pointer corresponding to said first input channel and the address contained in the output pointers corresponding to the output channels allocated to the receiving stations specify the address of the same exchange channel.

10. A switching network according to any one of claims 1 to 7, characterized in that, to establis a so-called « in-cast » type of communication between a plurality of transmitting stations and one receiving station, only one of said plurality of stations transmits at any given time, and the addresses contained in the input pointers corresponding to the input channels allocated to the transmitting stations and the address contained in the output pointer corresponding to the output channel allocated to the receiving station specify the address of the same exchange channel.

**Patentansprüche**

1. Verbindungsnetz, um selektiv mindestens einen eingehenden zeitlichen Kanal an einer eingehenden Multiplexverbindung (LME) mit mindestens einem ausgehenden zeitlichen Kanal an einer ausgehenden Multiplexverbindung (LMS) zu verbinden, vom Typ mit mehreren Schaltmodulen, von denen jedes mit einer ein- und der zugehörigen ausgehenden Multiplexverbindung verbunden ist, mit einem zeitlichen Eingangsschalter, der einen Eingangszählerspeicher (MTE) und einen Eingangspufferspeicher (MTE) umfasst, sowie einem zeitlichen Ausgangsschalter, der einen Ausgangszählerspeicher (MPS) und einen Ausgangspufferspeicher (MTS) umfasst, und Steuermittel (135), um die zeitlichen Ein- und Ausgangsschalter in Antwort auf Befehlsmeldung zu steuern, die von einem Steuergerät (20) empfangen werden, dadurch gekenzeichnet, dass es umfasst :

eine Verbindung in Schleife (10) in einer Richtung, im zeitlichen Multiplexbetrieb mit sich wiederholenden Rastern gleicher Dauer arbeiten, auf der ständig eine Multiplexmeldung läuft, deren Dauer mit der eines Rasters identisch ist, und die n zeitliche Austauschkanäle umfasst,

eine Synchronisierverbindung in Schleife (12), auf der ein Rastersynchronisiersignal läuft, das mit der Multiplexmeldung synchron ist, und

Schleifenbildungsmittel (11), um die Durchlaufzeit einer Multiplexmeldung um die Schleifenverbindung in einer Richtung (10) herum konstant und gleich der Dauer eines Rasters zu halten,

ferner dadurch gekennzeichnet, dass :

jedes Schaltmodul einen Zeitintervallzähler (60) enthält, der durch das Rastersynchronisiersignal synchronisiert wird, um den Synchronismus zwischen den zeitlichen Ausgangs- und Eingangszählern zu gewährleisten, Schalt- und Steuermittel, und Ringhaltermittel, welche einen Schaltzählspeicher (MPP) enthalten, der zyklisch bei jedem Raster vom Zeitintervallzähler adressiert wird, und Transfermittel (PA), um selektiv den Ausgang des zeitlichen Eingangsschalters an die Schleifenverbindung in einer Richtung unter Steuerung der vom Schaltungszählerspeicher gelesenen Schaltungszähler selektiv anzuschliessen,

der Eingangszählerspeicher zyklisch mit jedem Raster vom Zeitintervallzähler adressiert wird und die Eingangszähler speichert, von denen jeder eine Adresse enthält, während der in der n. Position des Eingangszählerspeichers gespeicherte Eingangszähler eine Adresse enthält, die die Nummer des Austauschkanals darstellt, an die der n. eingehende Kanal angeschlossen wird,

der Eingangspufferspeicher (MTE) den Inhalt der eingehenden zeitlichen Kanäle empfängt, der zyklisch mit jedem Raster an die von den im Eingangszählerspeicher gelesenen Eingangszählern spezifizierten Adressen eingetragen und zyklisch mit jedem Raster und sequentiell unter Steuerung des Zeitintervallzählers gelesen wird,

der Ausgangszählerspeicher (MPS) zyklisch mit diesem Raster vom Zeitintervallzähler adressiert wird und die Ausgangszähler speichert, von denen jeder eine Adresse enthält, sowie den in der n. Position des Ausgangszählerspeichers gespeicherten Ausgangszähler mit einer Adresse, die für die Nummer der ausgehenden Adresse steht, an die der n. Austauschkanal angeschlossen ist, und

der Ausgangspufferspeicher (MTS) den Inhalt der Austauschkanäle empfängt, der zyklisch mit jedem Raster unter Steuerung des Zeitintervallzählers eingetragen und zyklisch mit jedem Raster sequentiell unter der Steuerung der vom Ausgangszählerspeicher gelesenen Ausgangszähler gelesen wird.

2. Anschlussnetz gemäss Anspruch 1, dadurch gekennzeichnet, dass jedes Schaltmodul einen zeitlichen örtlichen Schalter umfasst, der enthält :

einen Speicher örtlicher Zähler (MPL), der zyklisch mit jedem Raster vom Zeitintervallzähler adressiert wird und die örtlichen Zähler speicher, von denen jeder eine Adresse enthält, wobei der in der n. Position des örtlichen Zählerspeichers gespeicherte örtliche Zähler eine Adresse enthält, die für die Nummer des Ausgangskanals steht, an die der n. eingehende Kanal angeschlossen ist, und

einen örtlichen Pufferspeicher (MTL), in den der Inhalt der an der Elngangsmultiplexverbindung eingehenden Kanäle zyklisch mit jedem Raster eingetragen wird, und sequentiell unter Steuerung des Zeitintervallzählers, und dessen Inhalt zyklisch mit jedem Raster unter der Steuerung des aus dem

**0 112 425**

Speicher der örtlichen Zähler gelesenen örtlichen Zähler gelesen wird.

3. Verbindungsnetz gemäss Anspruch 2, dadurch gekennzeichnet, dass der Speicher der Ausgangszähler und der Speicher der örtlichen Zähler aus einem gleichen Zählerspeicher (61) bestehen, der die Zähler speichert, von denen jeder eine Adresse und ein Anzeige-Bit (örtlich) enthält, das angibt, ob der Zähler ein Ausgangszähler oder ein örtlicher Zähler ist.

4. Verbindungsnetz gemäss Anspruch 1, dadurch gekennzeichnet, das es erste Schaltmittel (107, 108) enthält, die zwischen der eingehenden Multiplexverbindung und dem Eingangspufferspeicher eingeschoben werden, und dadurch, dass die Elngangszähler ein Markierbit enthalten, das, wenn es einen ersten Wert aufweist, die ersten Schaltmitel so einsetzt, dass sie die eingehenden Multiplexverbindung an den Eingang des Eingangspufferspeichers anschliessen, und wenn es den zum ersten Wert entgegengesetzten Wert aufweist, den Ausgang der ersten Schaltmittel auf Null setzt, und damit das Schreiben einer Null in den Eingangspufferspeicher bewirkt.

5. Verbindungsnetz gemäss Anspruch 1, dadurch gekennzeichnet, dass es zweite Schaltmittel (80) enthält, die zwischen der ausgehenden Multiplexverbindung und dem Ausgang des Ausgangspufferspeichers angeordnet sind, und dadurch, dass die Ausgangszähler ein Markierbit enthalten, das, wenn es einen ersten Wert aufweist, die zweiten Schaltmittel (80) so einsetzt, dass sie den Ausgang des Ausgangspufferspeichers an die Ausgangsmultiplexverbindung anschliessen, und dass, wenn es den zum ersten Wert entgegengesetzten Wert aufweist, die zweiten Schaltmittel (80) auf Null setzt und damit einen Ausgang Null an der Ausgehenden Multiplexverbindung bewirkt.

6. Schaltnetz gemäss Anspruch 3, dadurch gekennzeichnet, dass es Schaltmittel (80) umfasst, die zwischen den Ausgängen der Ausgangspufferspeicher und und dem Ortsspeicher und der ausgehenden Multiplexverbindung eingesetzt sind, und dadurch, dass die besagten Zähler ein Kennzeichnungsbit enthalten, das, wenn es auf einem ersten Wert steht, die Schaltmittel (80) so setzen, dass sie die Ausgänge der Ausgangspufferspeicher an die ausgehende Multiplexverbindung anschliessen und das, wenn es einen zum besagten ersten Wert entgegengesetzten Wert aufweist, den Ausgang der Schaltmittel (80) auf Null setzt und damit einen Null-Ausgang an der Ausgangspultiplexverbindung bewirkt.

7. Verbindungsnetz gemäss Anspruch 1 oder 2, dadurch gekennzeichnet, dass jeder der Eingangs-, Ausgangs- und Ortspufferspeicher aus 2 Pufferspeichern besteht, von denen der eine während eines Rasters in Betriebsart Schreiben und der andere in Betriebsart Lesen arbeitet.

8. Verbindungsnetz gemäss einem beliebigen der vorangehenden Ansprüche, dadurch gekennzeichnet, dass für die Erstellung einer Verbindung in zwei Richtungen zwischen einer ersten Station, der ein erster Eingangskanal an einer ersten Eingangsmultiplexverbindung und ein erster Ausgangskanal an einer ersten Ausgangsmultiplexverbindung zugeordnet sind, während die beiden Ein- und Ausgangsmultiplexverbindungen einem ersten Schaltmodul angeschlossen sind, und einer zweiten Station, der ein zweiter Eingangskanal auf einer zweiten Eingangsmultiplexverbindung und ein zweiter Ausgangskanal an einer zweiten Ausgangsmultiplexverbindung zugeordnet sind, wobei die zweiten Ein- und Ausgangsmultiplexverbindungen an ein zweites Schaltmodul angeschlossen sind, die in den Ein- und Ausgangszählern enthaltenen Adressen, die den ersten Ein- und Ausgangskanälen im ersten Schaltmodul entsprechen, und die in den Ein- und Ausgangszählern, die den zweiten Ein- und Ausgangskanälen entsprechen, enthaltenen Adressen im zweiten Schaltmodul die Adresse des gleichen Austauschkanals bestimmen.

9. Verbindungsnetz gemäss einem der Ansprüche 1 bis 7, dadurch gekennzeichnet, dass für die Erstellung einer Verteilungsverbindung zwischen einer Ausgabestation, der ein erster Eingangskanal an einer ersten Eingangsmultiplexverbindung zugeordnet ist, und mehreren Empfangsstationen, denen Ausgangskanäle verschiedenen Ausgangsmultiplexverbindungen zugeordnet sind, die im Eingangszähler enthaltene Adresse deren besagtem Eingangskanal entspricht und die in den Ausgangszählern enthaltene Adresse den den Empfangsstationen zugeordneten Ausgangskanälen entspricht, und die Adresse des gleichen Ausgangskanals festlegen.

10. Verbindungsnetz gemäss einem der Ansprüche 1 bis 7, dadurch gekennzeichnet, dass für die Erstellung einer Sammelverbindung zwischen mehreren Ausgabestationen und einer Empfangsstation eine einzige Sendestation zu einem gegebenen Zeitpunkt sendet und dass die in den Eingangszählern enthaltenen Adressen, die den den Sendestationen zugeordneten Eingängen entsprechen, und die im Ausgangszähler enthaltene, die dem der Empfangsstation zugeordneten Ausgangskanal entspricht, die Adresse des gleichen Ausgangskanals spezifizieren.

**FIG .1**

0 112 425

FIG.2

FIG.3

**FIG.4**

FIG.5

**FIG. 6**

FIG.7

| FIG.7A | FIG.7B | FIG.7C |
| FIG.7D | FIG.7E | FIG.7F |

FIG.7A

34

33

32

# FIG.7B

100

R/W — DEMPX 98

96 97

FIG.7C

0 112 425

FIG. 7D

FIG.7E

FIG. 7F

**FIG. 8**

ST AMONT

ST INT.

ST AVAL

16 MHZ

CLK 1

CLK 2

ANNEAU AMONT | 246 | 247 | 248

ANNEAU INT. | 245 | 246 | 247

ANNEAU AVAL | 245 | 246 | 247

LIAISON ENTRANTE | BIT 6 VOIE 31 | BIT 7 VOIE 31 | BIT 0 VOIE 0

LIAISON SORTANTE | BIT 6 VOIE 31 | BIT 7 VOIE 31 | BIT 0 VOIE 0

0 112 425

FIG. 9

FIG.10

FIG.11

FIG.12

**FIG.13**